(19) **Europäisches Patentamt European Patent Office Office européen des brevets**

(11) **EP 4 543 121 A1**

(12) **EUROPEAN PATENT APPLICATION**
published in accordance with Art. 153(4) EPC

(43) Date of publication:
**23.04.2025 Bulletin 2025/17**

(21) Application number: **23838719.5**

(22) Date of filing: **29.06.2023**

(51) International Patent Classification (IPC):
**H04W 72/12** (2023.01)

(52) Cooperative Patent Classification (CPC):
**H04B 7/22; H04W 72/12; H04W 72/1273; H04W 72/20**

(86) International application number:
**PCT/CN2023/104100**

(87) International publication number:
**WO 2024/012226 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.07.2022 CN 202210833936**

(71) Applicant: **Huawei Technologies Co., Ltd. Shenzhen, Guangdong 518129 (CN)**

(72) Inventors:
• **LUO, Zhihu**
  **Shenzhen, Guangdong 518129 (CN)**
• **LIN, Hui**
  **Shenzhen, Guangdong 518129 (CN)**
• **WU, Yiling**
  **Shenzhen, Guangdong 518129 (CN)**
• **JIN, Zhe**
  **Shenzhen, Guangdong 518129 (CN)**

(74) Representative: **Körber, Martin Hans Mitscherlich PartmbB Patent- und Rechtsanwälte Karlstraße 7 80333 München (DE)**

(54) **RECEIVING METHOD FOR CONTROL INFORMATION OF DOWNLINK DATA, SENDING METHOD FOR CONTROL INFORMATION OF DOWNLINK DATA, AND APPARATUS**

(57) A method and an apparatus for receiving control information of downlink data and a method and an apparatus for sending control information of downlink data are provided, to flexibly and accurately send and receive control information of downlink data, so as to improve transmission efficiency of the downlink data. A first device receives a synchronization signal from a second device, where at least one parameter of control information of downlink data is related to the synchronization signal. Then, the first device may receive the control information of the downlink data from the second device based on the at least one parameter of the control information of the downlink data. Further, the first device receives the downlink data from the second device based on the control information of the downlink data. The at least one parameter includes a resource position of the control information of the downlink data or a first parameter of the control information of the downlink data, and the control information of the downlink data is used to schedule the downlink data. Receiving of the control information of the downlink data is determined by using the synchronization signal, so that blind detection on the control information of the downlink data can be avoided, thereby improving transmission efficiency of the downlink data.

FIG. 2

**Description**

**CROSS-REFERENCE TO RELATED APPLICATIONS**

This application claims priority to Chinese Patent Application No. 202210833936.7, filed with the China National Intellectual Property Administration on July 14, 2022 and entitled "METHOD AND APPARATUS FOR RECEIVING CONTROL INFORMATION OF DOWNLINK DATA AND METHOD AND APPARATUS FOR SENDING CONTROL INFORMATION OF DOWNLINK DATA", which is incorporated herein by reference in its entirety.

**TECHNICAL FIELD**

This application relates to the field of communication technologies, and in particular, to a method and an apparatus for receiving control information of downlink data and a method and an apparatus for sending control information of downlink data.

**BACKGROUND**

Rapid development of internet of things (internet-of-things, IoT) technologies makes the internet of everything gradually become a reality. However, a battery life of an internet of things terminal device is relatively short. This increases maintenance difficulty and maintenance costs of the terminal device, and becomes a main bottleneck that restricts development of the internet of things. Backscatter (backscatter) communication based on wireless power transmission, envelope detection demodulation, and backscatter modulation technologies is expected to resolve service life and maintenance problems of the terminal device, so that an ultra-low-cost, high-density, and maintenance-free passive internet of things (passive IoT) becomes possible for a next-generation terminal device.

A widely used ultra-high frequency (ultra-high frequency, UHF) radio frequency identification (radio frequency identification, RFID) system is one type of backscatter communication system. A typical passive UHF RFID system architecture includes a reader (reader) and a tag (tag). The reader sends a downlink excitation signal to the tag to provide energy for the tag, and the tag receives signaling sent by the reader, and sends an uplink signal to the reader by using a backscattering technology.

In addition to the backscatter communication system, there is also a system with a wake-up mechanism (which may be referred to as a wake-up system). In this system, a network device may send a downlink wake-up signal (wake-up signal, WUS) to a terminal device in a power saving mode (power saving mode, PSM) or a sleep mode, to saving energy of the terminal.

In the backscatter communication system and the wake-up system, the terminal device usually blindly detects control information of downlink data. This may affect transmission efficiency of the downlink data.

**SUMMARY**

This application provides a method and an apparatus for receiving control information of downlink data and a method and an apparatus for sending control information of downlink data, to flexibly and accurately send and receive control information of downlink data, so as to improve transmission efficiency of the downlink data.

According to a first aspect, this application provides a method for receiving control information of downlink data. The method may be applied to a first device, or a processor, a chip, a functional module, or the like in the first device. For example, the method is applied to a first device. The method may include: The first device receives a synchronization signal from a second device, where at least one parameter of control information of downlink data is related to the synchronization signal. Then, the first device may receive the control information of the downlink data from the second device based on the at least one parameter of the control information of the downlink data. Further, the first device receives the downlink data from the second device based on the control information of the downlink data. The at least one parameter includes a resource position of the control information of the downlink data or a first parameter of the control information of the downlink data, and the control information of the downlink data is used to schedule the downlink data.

According to the method, receiving of the control information of the downlink data is determined by using the synchronization signal, so that blind detection on the control information of the downlink data can be avoided, thereby improving transmission efficiency of the downlink data. In addition, the control information of the downlink data is not carried by using the synchronization signal, so that synchronization complexity can be further reduced.

In a possible design, the synchronization signal includes one or more of the following functions: automatic gain control (automatic gain control, AGC), time synchronization, frequency synchronization, data packet detection, or boundary detection. Further, strength of a received signal may be adjusted through AGC to reduce distortion. Time synchronization may be used to obtain correct timing or sampling timing. Boundary detection may be used to detect a boundary of a preamble sequence and/or a boundary of downlink data.

In a possible design, in time domain, the synchronization signal is before the control information of the downlink data, and the control information of the downlink data is before the downlink data. In this way, the first device can accurately and sequentially receive a corresponding signal or data.

In a possible design, that the resource position of the control information of the downlink data is related to the synchronization signal may include: A time domain position of the control information of the downlink data may be determined based on a time domain position of the synchronization signal, and/or a frequency domain position of the control information of the downlink data may be determined based on a frequency domain position of the synchronization signal. In this way, the resource position of the control information of the downlink data can be accurately determined based on the time domain position and/or the frequency domain position of the synchronization signal.

In a possible design, a start time domain position of the control information of the downlink data is adjacent to an end time domain position of the synchronization signal; or there is a first time interval between a start time domain position of the control information of the downlink data and an end time domain position of the synchronization signal; or there is a second time interval between a start time domain position of the control information of the downlink data and a start time domain position of the synchronization signal; or there is a third time interval between an end time domain position of the control information of the downlink data and an end time domain position of the synchronization signal. The first time interval is preset, or the first time interval is configured by the second device, or the first time interval is related to a parameter of the synchronization signal. The second time interval is preset, or the second time interval is configured by the second device, or the second time interval is related to a parameter of the synchronization signal. The third time interval is preset, or the third time interval is configured by the second device, or the third time interval is related to a parameter of the synchronization signal. The parameter of the synchronization signal includes one or more of the following: a sequence of the synchronization signal, a length of the synchronization signal, a quantity of repetitions of the synchronization signal, or a spreading factor of the synchronization signal. In this way, a time domain resource position of the control information of the downlink data can be flexibly and accurately determined by using the synchronization signal in a plurality of manners.

In a possible design, a center frequency of a frequency domain resource of the control information of the downlink data may be the same as a center frequency of a frequency domain resource of the synchronization signal, and a bandwidth of the control information of the downlink data is different from a bandwidth of the synchronization signal; or a frequency domain resource of the control information of the downlink data is the same as a frequency domain resource of the synchronization signal; or there is a first frequency domain gap between a start frequency domain position of the control information of the downlink data and an end frequency domain position of the synchronization signal; or there is a second frequency domain gap between a start frequency domain position of the control information of the downlink data and a start frequency domain position of the synchronization signal; or there is a third frequency domain gap between an end frequency domain position of the control information of the downlink data and an end frequency domain position of the synchronization signal. The first frequency domain gap is preset, or the first frequency domain gap is configured by the second device, or the first frequency domain gap is related to a parameter of the synchronization signal. The second frequency domain gap is preset, or the second frequency domain gap is configured by the second device, or the second frequency domain gap is related to a parameter of the synchronization signal. The third frequency domain gap is preset, or the third frequency domain gap is configured by the second device, or the third frequency domain gap is related to a parameter of the synchronization signal. The parameter of the synchronization signal includes one or more of the following: the sequence of the synchronization signal, the length of the synchronization signal, the quantity of repetitions of the synchronization signal, or the spreading factor of the synchronization signal. In this way, a frequency domain resource position of the control information of the downlink data can be flexibly and accurately determined by using the frequency domain resource of the synchronization signal in a plurality of manners.

In a possible design, a quantity of bits of the control information of the downlink data is less than X, a cyclic redundancy check (cyclic redundancy check, CRC) is not used for the control information of the downlink data, a CRC is used for the downlink data, and X is a positive integer; or a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers. It is assumed that the quantity of bits occupied by the control information of the downlink data is denoted as N1, and the quantity of bits of the CRC used for the control information of the downlink data is denoted as L1. When the CRC is not used for the control information of the downlink data, it may be considered that L1 is 0. Generally, N1 is less than a quantity of bits occupied by the downlink data. In this case, L1 is a relatively small value, so that CRC overheads can be reduced, that is, L1/(N1+L1) can be reduced. In this way, resources required for transmitting the control information of the downlink data can be reduced.

In a possible design, L1 is 6, and L2 is 16 or 24. In this way, an implementation is simple.

In a possible design, L1 may be determined based on the quantity of bits of the control information of the downlink data. It is assumed that the quantity of bits occupied by the control information of the downlink data is denoted as N1, and the quantity of bits of the CRC used for the control information of the downlink data is denoted as L1. When the CRC is not used for the control information of the downlink data, it may be considered that L1 is 0. A value of L1 is determined based on N1, so that CRC overheads can be flexibly adjusted. When N1 is relatively small, relatively small L1 may be used, and CRC overheads can be reduced, that is, L1/(N1+L1) can be reduced. When N1 is relatively large, relatively large L1 may be used, so that acceptable CRC overheads can be maintained, and CRC check performance can be ensured, because a larger quantity of CRC bits indicates a stronger error check capability.

In a possible design, a method for determining L1 based on the quantity of bits of the control information of the downlink data may be: When the quantity of bits of the control information of the downlink data is less than or equal to a first value, L1 is 6; or when the quantity of bits of the control information of the downlink data is greater than the first value, L1 is 11. It is assumed that the quantity of bits occupied by the control information of the downlink data is denoted as N1, and the quantity of bits of the CRC used for the control information of the downlink data is denoted as L1. When the CRC is not used for the control information of the downlink data, it may be considered that L1 is 0. A value of L1 is determined based on N1, so that CRC overheads can be flexibly adjusted. When N1 is relatively small, relatively small L1 may be used, and CRC overheads can be reduced, that is, L1/(N1+L1) can be reduced. When N1 is relatively large, relatively large L1 may be used, so that acceptable CRC overheads can be maintained, and CRC check performance can be ensured, because a larger quantity of CRC bits indicates a stronger error check capability.

In a possible design, the control information of the downlink data and the downlink data support channel coding, and a channel coding type supported by the control information of the downlink data is the same as a channel coding type supported by the downlink data. The control information of the downlink data and the downlink data support channel coding, so that transmission reliability of the control information of the downlink data and the downlink data can be improved. The same channel coding type is used for the control information of the downlink data and the downlink data. For the second device, a same encoder may be reused, so that implementation complexity of the second device can be reduced. For the first device, a same decoder may be reused, so that implementation complexity of the first device can be reduced.

In a possible design, the control information of the downlink data includes a field indicating a transport block size of the downlink data or a field indicating a code block size of the downlink data. The control information of the downlink data includes the field indicating the transport block size of the downlink data or the field indicating the code block size of the downlink data, so that the second device can correctly decode the downlink data based on the control information of the downlink data, to avoid blind detection on the transport block size of the downlink data or the code block size of the downlink data, and reduce complexity of decoding the downlink data by the first device.

In a possible design, that the first parameter of the control information of the downlink data is related to the synchronization signal may include: The first parameter of the control information of the downlink data may be determined based on a parameter of the synchronization signal. The parameter of the synchronization signal includes one or more of the following: the sequence of the synchronization signal, the length of the synchronization signal, the quantity of repetitions of the synchronization signal, or the spreading factor of the synchronization signal. In this way, the first parameter of the control information of the downlink data can be accurately determined with reference to the actual synchronization signal.

In a possible design, the first parameter of the control information of the downlink data may include one or more of the following: a bandwidth of the control information of the downlink data, a subcarrier spacing of the control information of the downlink data, a cyclic prefix (cyclic prefix, CP) type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data. In this way, the first device can accurately receive the control information of the downlink data by using the foregoing parameter subsequently.

In a possible design, a coverage level of the synchronization signal corresponds to a parameter of the synchronization signal, and the parameter of the synchronization signal includes one or more of the following: the sequence of the synchronization signal, the length of the synchronization signal, the quantity of repetitions of the synchronization signal, or the spreading factor of the synchronization signal. In this way, the coverage level of the synchronization signal can be accurately determined by using the parameter of the synchronization signal, so that the first device can determine downlink channel quality based on the synchronization signal.

In a possible design, the control information of the downlink data may include one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data. In this way, the first device can accurately receive the downlink data by using the foregoing content subsequently.

In a possible design, a value range of a second parameter in the control information of the downlink data may be related to a parameter of the synchronization signal; the parameter of the synchronization signal may include one or more of the following: the sequence of the synchronization signal, the length of the synchronization signal, the quantity of repetitions of the synchronization signal, or the spreading factor of the synchronization signal; and the second parameter in the control information of the downlink data may include one or more of the following: the quantity of repetitions of the downlink data, the modulation scheme of the downlink data, the channel coding parameter of the downlink data, or the line code parameter of the downlink data. In this way, the second parameter can be accurately determined with reference to the actual synchronization signal.

In a possible design, the control information of the downlink data may indicate the modulation scheme of the downlink data and the channel coding parameter of the downlink data by using a first index. In this way, indication signaling overheads of the control information of the downlink data can be reduced.

In a possible design, the control information of the downlink data may include first indication information and/or second indication information; the first indication information indicates whether channel coding is enabled for the downlink data; and the second indication information indicates whether the downlink data has an end indicator. In this way, a transmission manner of the downlink data can be flexibly indicated.

In a possible design, when the control information of the downlink data indicates that channel coding is enabled for the downlink data, the control information of the downlink data includes information used to determine a modulation and coding scheme (modulation and coding scheme, MCS) of the downlink data or the channel coding parameter of the downlink data; or when the control information of the downlink data indicates that channel coding is not enabled for the downlink data, the control information of the downlink data includes information used to determine the quantity of repetitions of the downlink data. In this way, transmission of the downlink data can be flexibly controlled.

In a possible design, the information used to determine the MCS of the downlink data or the channel coding parameter of the downlink data and the information used to determine the quantity of repetitions of the downlink data occupy a same bit. In this way, different functions can be indicated by using a same bit in different cases, thereby reducing bit occupation.

In a possible design, when the second indication information indicates that the downlink data does not have an end indicator, the control information of the downlink data may include a field indicating a transport block size of the downlink data or a field indicating a code block size of the downlink data; or when the second indication information indicates that the downlink data has an end indicator, the control information of the downlink data may include a field indicating an MCS of the downlink data or a field indicating the quantity of repetitions of the downlink data. In this way, transmission of the downlink data can be flexibly controlled.

In a possible design, the first device receives first information from the second device, where the first information indicates a coverage level of a synchronization signal corresponding to downlink data after the downlink data. In this way, the coverage level is switched in a timely manner when the coverage level needs to be switched, thereby improving data transmission accuracy.

According to a second aspect, this application provides a method for sending control information of downlink data. The method may be applied to a first device, or a processor, a chip, a functional module, or the like in the first device. For example, the method is applied to a second device. The method may include: The second device sends a synchronization signal to a first device, where at least one parameter of control information of downlink data is related to the synchronization signal. Then, the second device may send the control information of the downlink data to the first device based on the at least one parameter of the control information of the downlink data. Further, the second device sends the downlink data to the first device based on the control information of the downlink data. The at least one parameter may include a resource position of the control information of the downlink data or a first parameter of the control information of the downlink data, and the control information of the downlink data is used to schedule the downlink data.

According to the method, sending of the control information of the downlink data is determined by using the synchronization signal, so that blind detection of the first device on the control information of the downlink data can be avoided, thereby improving transmission efficiency of the downlink data. In addition, the control information of the downlink data is not carried by using the synchronization signal, so that synchronization complexity can be further reduced.

In a possible design, the synchronization signal includes one or more of the following functions: automatic gain control AGC, time synchronization, frequency synchronization, data packet detection, or boundary detection. Further, strength of a received signal may be adjusted through AGC to reduce distortion. Time synchronization may be used to obtain correct timing or sampling timing. Boundary detection may be used to detect a boundary of a preamble sequence and/or a boundary of downlink data.

In a possible design, in time domain, the synchronization signal is before the control information of the downlink data, and the control information of the downlink data is before the downlink data. In this way, the second device can accurately and sequentially send a corresponding signal or data.

In a possible design, that the resource position of the control information of the downlink data is related to the synchronization signal may include: A time domain position of the control information of the downlink data is determined based on a time domain position of the synchronization signal, and/or a frequency domain position of the control information of the downlink data is determined based on a frequency domain position of the synchronization signal. In this way, the resource position of the control information of the downlink data can be accurately determined based on the time domain position and/or the frequency domain position of the synchronization signal.

In a possible design, a start time domain position of the control information of the downlink data is adjacent to an end time domain position of the synchronization signal; or there is a first time interval between a start time domain position of the control information of the downlink data and an end time domain position of the synchronization signal; or there is a second time interval between a start time domain position of the control information of the downlink data and a start time domain position of the synchronization signal; or there is a third time interval between an end time domain position of the control information of the downlink data and an end time domain position of the synchronization signal. The first time interval is preset, or the first time interval is configured by the second device, or the first time interval is related to a parameter of the synchronization signal. The second time interval is preset, or the second time interval is configured by the second device, or the second time interval is related to a parameter of the synchronization signal. The third time interval is preset, or the third time interval is configured by the second device, or the third time interval is related to a parameter of the synchronization signal. The parameter of the synchronization signal includes one or more of the following: a sequence of the synchronization signal, a length of the synchronization signal, a quantity of repetitions of the synchronization signal, or a spreading factor of the synchronization signal. In this way, a time domain resource position of the control information of the downlink data can be flexibly and accurately determined by using the synchronization signal in a plurality of manners.

In a possible design, a center frequency of a frequency domain resource of the control information of the downlink data may be the same as a center frequency of a frequency domain resource of the synchronization signal, and a bandwidth of the control information of the downlink data is different from a bandwidth of the synchronization signal; or a frequency domain resource of the control information of the downlink data may be the same as a frequency domain resource of the synchronization signal; or there may be a first frequency domain gap between a start frequency domain position of the control information of the downlink data and an end frequency domain position of the synchronization signal; or there is a second frequency domain gap between a start frequency domain position of the control information of the downlink data and a start frequency domain position of the synchronization signal; or there is a third frequency domain gap between an end frequency domain position of the control information of the downlink data and an end frequency domain position of the synchronization signal. The first frequency domain gap is preset, or the first frequency domain gap is configured by the second device, or the first frequency domain gap is related to a parameter of the synchronization signal. The second frequency domain gap is preset, or the second frequency domain gap is configured by the second device, or the second frequency domain gap is related to a parameter of the synchronization signal. The third frequency domain gap is preset, or the third frequency domain gap is configured by the second device, or the third frequency domain gap is related to a parameter of the synchronization signal. The parameter of the synchronization signal includes one or more of the following: the sequence of the synchronization signal, the length of the synchronization signal, the quantity of repetitions of the synchronization signal, or the spreading factor of the synchronization signal. In this way, a frequency domain resource position of the control information of the downlink data can be flexibly and accurately determined by using the frequency domain resource of the synchronization signal in a plurality of manners.

In a possible design, a quantity of bits of the control information of the downlink data is less than X, a cyclic redundancy check CRC is not used for the control information of the downlink data, a CRC is used for the downlink data, and X is a positive integer; or a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers. It is assumed that the quantity of bits occupied by the control information of the downlink data is denoted as N1, and the quantity of bits of the CRC used for the control information of the downlink data is denoted as L1. When the CRC is not used for the control information of the downlink data, it may be considered that L1 is 0. Generally, N1 is less than a quantity of bits occupied by the downlink data. In this case, L1 is a relatively small value, so that CRC overheads can be reduced, that is, L1/(N1+L1) can be reduced. In this way, resources required for transmitting the control information of the downlink data can be reduced.

In a possible design, L1 is 6, and L2 is 16 or 24. In this way, an implementation is simple.

In a possible design, L1 may be determined based on the quantity of bits of the control information of the downlink data. It is assumed that the quantity of bits occupied by the control information of the downlink data is denoted as N1, and the quantity of bits of the CRC used for the control information of the downlink data is denoted as L1. When the CRC is not used for the control information of the downlink data, it may be considered that L1 is 0. A value of L1 is determined based on N1, so that CRC overheads can be flexibly adjusted. When N1 is relatively small, relatively small L1 may be used, and CRC overheads can be reduced, that is, L1/(N1+L1) can be reduced. When N1 is relatively large, relatively large L1 may be used, so that acceptable CRC overheads can be maintained, and CRC check performance can be ensured, because a larger quantity of CRC bits indicates a stronger error check capability.

In a possible design, a method for determining L1 based on the quantity of bits of the control information of the downlink data may be: When the quantity of bits of the control information of the downlink data is less than or equal to a first value, L1 is 6; or when the quantity of bits of the control information of the downlink data is greater than the first value, L1 is 11. It is assumed that the quantity of bits occupied by the control information of the downlink data is denoted as N1, and the quantity of bits of the CRC used for the control information of the downlink data is denoted as L1. When the CRC is not used for the control information of the downlink data, it may be considered that L1 is 0. A value of L1 is determined based on N1, so that CRC overheads can be flexibly adjusted. When N1 is relatively small, relatively small L1 may be used, and CRC overheads can be reduced, that is, L1/(N1+L1) can be reduced. When N1 is relatively large, relatively large L1 may be used, so that acceptable CRC overheads can be maintained, and CRC check performance can be ensured, because a larger quantity of CRC bits indicates a stronger error check capability.

In a possible design, the control information of the downlink data and the downlink data support channel coding, and a channel coding type supported by the control information of the downlink data is the same as a channel coding type supported by the downlink data. The control information of the downlink data and the downlink data support channel coding, so that transmission reliability of the control information of the downlink data and the downlink data can be improved. The same channel coding type is used for the control information of the downlink data and the downlink data. For the second device, a same encoder may be reused, so that implementation complexity of the second device can be reduced. For the first device, a same decoder may be reused, so that implementation complexity of the first device can be reduced.

In a possible design, the control information of the downlink data includes a field indicating a transport block size of the downlink data or a field indicating a code block size of the downlink data. The control information of the downlink data includes the field indicating the transport block size of the downlink data or the field indicating the code block size of the downlink data, so that the second device can correctly decode the downlink data based on the control information of the downlink data, to avoid blind detection on the transport block size of the downlink data or the code block size of the downlink data, and reduce complexity of decoding the downlink data by the first device.

In a possible design, that the first parameter of the control information of the downlink data is related to the synchronization signal may be: The first parameter of the control information of the downlink data may be determined based on a parameter of the synchronization signal. The parameter of the synchronization signal may include one or more of the following: the sequence of the synchronization signal, the length of the synchronization signal, the quantity of repetitions of the synchronization signal, or the spreading factor of the synchronization signal. In this way, the first parameter of the control information of the downlink data can be accurately determined with reference to the actual synchronization signal.

In a possible design, the first parameter of the control information of the downlink data may include one or more of the following: a bandwidth of the control information of the downlink data, a subcarrier spacing of the control information of the downlink data, a cyclic prefix CP type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data. In this way, the second device can accurately send the control information of the downlink data by using the foregoing parameter subsequently.

In a possible design, a coverage level of the synchronization signal corresponds to a parameter of the synchronization signal, and the parameter of the synchronization signal may include one or more of the following: the sequence of the synchronization signal, the length of the synchronization signal, the quantity of repetitions of the synchronization signal, or the spreading factor of the synchronization signal. In this way, the coverage level of the synchronization signal can be accurately determined by using the parameter of the synchronization signal, so that the first device can determine downlink channel quality based on the synchronization signal.

In a possible design, the control information of the downlink data may include one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data. In this way, the second device can accurately send the downlink data by using the foregoing content subsequently.

In a possible design, a value range of a second parameter in the control information of the downlink data may be related to a parameter of the synchronization signal; the parameter of the synchronization signal may include one or more of the following: the sequence of the synchronization signal, the length of the synchronization signal, the quantity of repetitions of the synchronization signal, or the spreading factor of the synchronization signal; and the second parameter in the control information of the downlink data may include one or more of the following: the quantity of repetitions of the downlink data, the modulation scheme of the downlink data, the channel coding parameter of the downlink data, or the line code parameter of the downlink data. In this way, the second parameter can be accurately determined with reference to the actual synchronization signal.

In a possible design, the control information of the downlink data indicates the modulation scheme of the downlink data and the channel coding parameter of the downlink data by using a first index. In this way, indication signaling overheads of the control information of the downlink data can be reduced.

In a possible design, the control information of the downlink data may include first indication information and/or second indication information; the first indication information indicates whether channel coding is enabled for the downlink data; and the second indication information indicates whether the downlink data has an end indicator. In this way, a transmission manner of the downlink data can be flexibly indicated.

In a possible design, when the control information of the downlink data indicates that channel coding is enabled for the downlink data, the control information of the downlink data includes information used to determine a modulation and coding scheme MCS or the channel coding parameter of the downlink data; or when the control information of the downlink data indicates that channel coding is not enabled for the downlink data, the control information of the downlink data includes information used to determine the quantity of repetitions of the downlink data. In this way, a transmission manner of the downlink data can be flexibly indicated.

In a possible design, the information used to determine the MCS or the channel coding parameter of the downlink data and the information used to determine the quantity of repetitions of the downlink data occupy a same bit. In this way, different functions can be indicated by using a same bit in different cases, thereby reducing bit occupation.

In a possible design, when the second indication information indicates that the downlink data does not have an end indicator, the control information of the downlink data includes a field indicating a transport block size of the downlink data or a field indicating a code block size of the downlink data; or when the second indication information indicates that the downlink data has an end indicator, the control information of the downlink data includes a field indicating an MCS of the downlink data or a field indicating the quantity of repetitions of the downlink data. In this way, transmission of the downlink data can be flexibly controlled.

In a possible design, the second device determines that a coverage level of a synchronization signal corresponding to downlink data after the downlink data needs to be updated. Further, the second device may send first information to the first device, where the first information indicates the coverage level of the synchronization signal corresponding to the downlink data after the downlink data. In this way, the coverage level is switched in a timely manner when the coverage level needs to be switched, thereby improving data transmission accuracy.

According to a third aspect, this application provides a method for receiving and sending control information of downlink data. The method may include: A second device sends a synchronization signal to a first device. Correspondingly, the first device receives the synchronization signal from the second device. At least one parameter of control information of downlink data is related to the synchronization signal, the at least one parameter includes a resource position of the control information of the downlink data or a first parameter of control information of the downlink data, and the control information of the downlink data is used to schedule the downlink data. Subsequently, the second device sends the control information of the downlink data to the first device based on the at least one parameter of the control information of the downlink data. Correspondingly, the first device receives the control information of the downlink data from the second device based on the at least one parameter of the control information of the downlink data. Finally, the second device sends the downlink data to the first device based on the control information of the downlink data. Correspondingly, the first device receives the downlink data from the second device based on the control information of the downlink data.

According to the method, receiving of the control information of the downlink data is determined by using the synchronization signal, so that blind detection on the control information of the downlink data can be avoided, thereby improving transmission efficiency of the downlink data. In addition, the control information of the downlink data is not carried by using the synchronization signal, so that synchronization complexity can be further reduced.

In a possible design, that the resource position of the control information of the downlink data is related to the synchronization signal may include: A time domain position of the control information of the downlink data is determined based on a time domain position of the synchronization signal, and/or a frequency domain position of the control information of the downlink data is determined based on a frequency domain position of the synchronization signal. In this way, the resource position of the control information of the downlink data can be accurately determined based on the time domain position and/or the frequency domain position of the synchronization signal.

In a possible design, a start time domain position of the control information of the downlink data is adjacent to an end time domain position of the synchronization signal; or there is a first time interval between a start time domain position of the control information of the downlink data and an end time domain position of the synchronization signal; and the first time interval is preset, or the first time interval is configured by the second device, or the first time interval is related to a parameter of the synchronization signal, and the parameter of the synchronization signal includes one or more of the following: a sequence of the synchronization signal, a length of the synchronization signal, a quantity of repetitions of the synchronization signal, or a spreading factor of the synchronization signal. In this way, a time domain resource position of the control information of the downlink data can be flexibly and accurately determined by using the synchronization signal in a plurality of manners.

In a possible design, a quantity of bits of the control information of the downlink data is less than X, a cyclic redundancy check CRC is not used for the control information of the downlink data, and X is a positive integer; or a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers. It is assumed that the quantity of bits occupied by the control information of the downlink data is denoted as N1, and the quantity of bits of the CRC used for the control information of the downlink data is denoted as L1. When the CRC is not used for the control information of the downlink data, it may be considered that L1 is 0. Generally, N1 is less than a quantity of bits occupied by the downlink data. In this case, L1 is a relatively small value, so that CRC overheads can be reduced, that is, L1/(N1+L1) can be reduced. In this way, resources required for transmitting the control information of the downlink data can be reduced.

In a possible design, that the first parameter of the control information of the downlink data is related to the synchronization signal may include: The first parameter of the control information of the downlink data is determined based on a parameter of the synchronization signal. The parameter of the synchronization signal includes one or more of the following: the sequence of the synchronization signal, the length of the synchronization signal, the quantity of repetitions of the synchronization signal, or the spreading factor of the synchronization signal. In this way, the first parameter of the control information of the downlink data can be accurately determined with reference to the actual synchronization signal.

In a possible design, the first parameter of the control information of the downlink data includes one or more of the following: a bandwidth of the control information of the downlink data, a subcarrier spacing of the control information of the downlink data, a cyclic prefix CP type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data. In this way, the first device can accurately receive the control information of the downlink data by using the foregoing parameter subsequently.

In a possible design, the control information of the downlink data includes one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data. In this way, the first device can accurately receive the downlink data by using the foregoing content subsequently.

In a possible design, a value range of a second parameter in the control information of the downlink data is related to a parameter of the synchronization signal; the parameter of the synchronization signal includes one or more of the following: the sequence of the synchronization signal, the length of the synchronization signal, the quantity of repetitions of the synchronization signal, or the spreading factor of the synchronization signal; and the second parameter in the control information of the downlink data includes one or more of the following: the quantity of repetitions of the downlink data, the modulation scheme of the downlink data, the channel coding parameter of the downlink data, or the line code parameter of the downlink data. In this way, the second parameter can be accurately determined with reference to the actual synchronization signal.

According to a fourth aspect, this application further provides an apparatus for sending control information of downlink data. The apparatus for sending control information of downlink data has a function of implementing the first device in the first aspect or the possible design examples of the first aspect, or the third aspect or the possible design examples of the third aspect. The function may be implemented by using hardware, or may be implemented by using hardware executing corresponding software. The hardware or the software includes one or more modules corresponding to the foregoing function.

In a possible design, a structure of the apparatus for sending control information of downlink data includes a transceiver unit and a processing unit. These units may perform corresponding functions of the first device in the first aspect or the possible design examples of the first aspect, or the third aspect or the possible design examples of the third aspect. For details, refer to detailed descriptions in the method examples. Details are not described herein again.

In a possible design, a structure of the apparatus for sending control information of downlink data includes a transceiver and a processor, and optionally further includes a memory. The transceiver is configured to receive and send information, signals, or data, and is configured to communicate and interact with another device in a communication system. The processor is configured to support the apparatus for sending control information of downlink data in performing a corresponding function of the first device in the first aspect or the possible design examples of the first aspect, or the third aspect or the possible design examples of the third aspect. The memory is coupled to the processor, and the memory stores program instructions and data that are necessary for the apparatus for sending control information of downlink data.

In a possible design, a structure of the apparatus for sending control information of downlink data includes a memory and a processor. The processor is configured to support the apparatus for sending control information of downlink data in performing a corresponding function of the first device in the first aspect or the possible design examples of the first aspect, or the third aspect or the possible design examples of the third aspect. The memory is coupled to the processor, and the memory stores program instructions and data that are necessary for the apparatus for sending control information of downlink data.

According to a fifth aspect, this application further provides an apparatus for receiving control information of downlink data. The apparatus for receiving control information of downlink data has a function of implementing the second device in the second aspect or the possible design examples of the second aspect, or the third aspect or the possible design examples of the third aspect. The function may be implemented by using hardware, or may be implemented by using hardware executing corresponding software. The hardware or the software includes one or more modules corresponding to the foregoing function.

In a possible design, a structure of the apparatus for receiving control information of downlink data includes a transceiver unit and a processing unit. These units may perform corresponding functions of the second device in the second aspect or the possible design examples of the second aspect, or the third aspect or the possible design examples of the third aspect. For details, refer to detailed descriptions in the method examples. Details are not described herein again.

In a possible design, a structure of the apparatus for receiving control information of downlink data includes a transceiver and a processor, and optionally further includes a memory. The transceiver is configured to receive and send information, signals, or data, and is configured to communicate and interact with another device in a communication system. The processor is configured to support the apparatus for receiving control information of downlink data in performing a corresponding function of the second device in the second aspect or the possible design examples of the second aspect, or the third aspect or the possible design examples of the third aspect. The memory is coupled to the processor, and the memory stores program instructions and data that are necessary for the apparatus for receiving control information of downlink data.

In a possible design, a structure of the apparatus for receiving control information of downlink data includes a memory and a processor. The processor is configured to support the apparatus for receiving control information of downlink data in performing a corresponding function of the second device in the second aspect or the possible design examples of the second aspect, or the third aspect or the possible design examples of the third aspect. The memory is coupled to the processor, and the memory stores program instructions and data that are necessary for the apparatus for receiving control information of downlink data.

According to a sixth aspect, an embodiment of this application provides a communication system. The communication system may include the first device and the second device mentioned above.

According to a seventh aspect, an embodiment of this application provides a computer-readable storage medium. The computer-readable storage medium stores program instructions, and when the program instructions are run on a computer, the computer is enabled to perform the method in the first aspect and any possible design of the first aspect or in the second aspect and any possible design of the second aspect in embodiments of this application. For example, the computer-readable storage medium may be any usable medium that can be accessed by the computer. By way of an example rather than a limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to an eighth aspect, an embodiment of this application provides a computer program product including computer program code or instructions. When the computer program product runs on a computer, the computer is enabled to implement the method in the first aspect or any possible design of the first aspect, or the second aspect or any possible design of the second aspect, or the third aspect or any possible design of the third aspect.

According to a ninth aspect, this application further provides a chip, including a processor. The processor is coupled to a memory, and is configured to read and execute program instructions stored in the memory, so that the chip implements the method in the first aspect or any possible design of the first aspect, or the second aspect or any possible design of the second aspect, or the third aspect or any possible design of the third aspect.

For the aspects in the fourth aspect to the ninth aspect and technical effects that can be achieved by the aspects, refer to the descriptions of the technical effects that can be achieved by the first aspect or the possible solutions of the first aspect, the second aspect or the possible solutions of the second aspect, or the third aspect or the possible solutions of the third aspect. Details are not described herein again.

## BRIEF DESCRIPTION OF DRAWINGS

FIG. 1a is a diagram of an architecture of a communication system according to this application;

FIG. 1b is a diagram of a signal envelope according to this application;

FIG. 2 is a flowchart of a method for sending and receiving control information of downlink data according to this application;

FIG. 3 is a diagram in which a start time domain position of control information of downlink data is adjacent to an end time domain position of a synchronization signal according to this application;

FIG. 4 is a diagram in which there is a first time interval between a start time domain position of control information of downlink data and an end time domain position of a synchronization signal according to this application;

FIG. 5 is a diagram in which a center frequency of a frequency domain resource of control information of downlink data is the same as a center frequency of a frequency domain resource of a synchronization signal and a bandwidth of the control information of the downlink data is different from a bandwidth of the synchronization signal according to this application;

FIG. 6 is a diagram in which a frequency domain resource of control information of downlink data is the same as a frequency domain resource of a synchronization signal according to this application;

FIG. 7 is a diagram in which there is a second frequency domain gap between a start frequency domain position of control information of downlink data and a start frequency domain position of a synchronization signal according to this application;

FIG. 8 is a diagram of an association relationship between control information of downlink data and synchronization signals at different repetition levels according to this application;

FIG. 9 is a diagram of a communication process between a reader and a tag according to this application;

FIG. 10 is a diagram of coverage level switching according to this application;

FIG. 11 is a diagram of a structure of a communication apparatus according to this application; and

FIG. 12 is a diagram of a structure of a communication apparatus according to this application.

## DESCRIPTION OF EMBODIMENTS

The following further describes this application in detail with reference to accompanying drawings.

Embodiments of this application provide a method and an apparatus for receiving control information of downlink data and a method and an apparatus for sending control information of downlink data, to flexibly and accurately send and receive control information of downlink data, so as to improve transmission efficiency of the downlink data. The method and the apparatus in this application are based on a same technical concept. Because the method and the apparatus have similar principles for resolving a problem, mutual reference may be made between implementations of the apparatus and the method. Repeated parts are not described in detail again.

In the descriptions of this application, words such as "first" and "second" are merely used for distinguishing, and cannot be understood as an indication or implication of relative importance or an indication or implication of a sequence.

In the descriptions of this application, "at least one (type)" means one or more (types), and "a plurality of (types)" means two or more (types). "At least one of the following items" or a similar expression thereof means any combination of these items, including a single item or any combination of a plurality of items. For example, at least one of a, b, or c may indicate a, b, c, a and b, a and c, b and c, or a, b, and c, where a, b, and c may be singular or plural.

In the descriptions of this application, the term "and/or" describes an association relationship of associated objects, and indicates that three relationships may exist. For example, A and/or B may indicate the following three cases: Only A exists, both A and B exist, and only B exists. A and B may be singular or plural. "/" indicates "or". For example, a/b indicates a or b.

To describe the technical solutions in embodiments of this application more clearly, a method and an apparatus for receiving control information of downlink data and a method and an apparatus for sending control information of downlink data in embodiments of this application are described in detail below with reference to the accompanying drawings.

The communication method provided in this application may be applied to various communication systems. For example, embodiments of this application are applicable to an internet of things (internet of things, IoT) network, a backscatter communication system, or a wake-up system. Certainly, embodiments of this application are further applicable to another possible communication system, for example, a long term evolution (long term evolution, LTE) system, an LTE frequency division duplex (frequency division duplex, FDD) system, an LTE time division duplex (time division duplex, TDD) system, a long term evolution advanced (LTE advanced, LTE-A) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system (such as a new radio (new radio, NR) system), a future 6th generation (6th generation, 6G) communication system, or another future communication system or network. It is only required that an entity in the communication system can send information, and another entity in the communication system can receive information.

The foregoing communication system applicable to this application is only an example for description, and the communication system applicable to this application is not limited thereto. This is uniformly described herein, and details are not described below again.

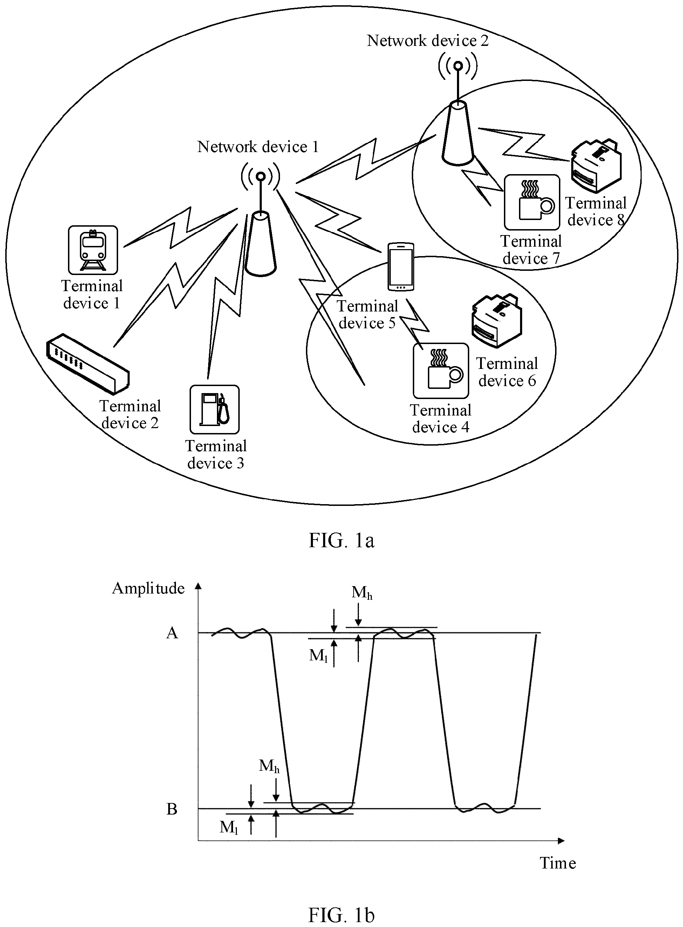

For example, FIG. 1a shows a possible architecture of a communication system to which a communication method provided in this application is applicable. A structure of the communication system may include at least one network device and at least one terminal device. For example, as shown in FIG. 1a, the communication system may include two network devices: a network device 1 and a network device 2, and eight terminal devices: a terminal device 1 to a terminal device 8.

In the communication system, the network device 1 may send information to one or more terminal devices in the terminal device 1 to the terminal device 6. The network device 1 may send information to one or more terminal devices in the terminal device 7 and the terminal device 8 through the network device 2. In addition, the terminal device 4 to the terminal device 6 may also form a communication subsystem. In the communication subsystem, the terminal device 5 may send information to one or more terminal devices in the terminal device 4 and the terminal device 6. The network device 2, the terminal device 7, and the terminal device 8 may also form a communication subsystem. In the communication subsystem, the network device 2 may send information to one or more terminal devices in the terminal device 7 and the terminal device 8. It should be understood that FIG. 1a is merely a diagram. A type of the communication system, and a quantity, a type, and the like of devices included in the communication system are not specifically limited in this application.

The network device may be a device having wireless sending and receiving functions or a chip that may be disposed in the network device. The network device includes but is not limited to: an eNodeB (eNodeB) in LTE, a gNB (generation NodeB, gNB) in NR, a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP), a transmission point (transmission point, TP), or the like. Alternatively, the network device may be a network node, for example, a baseband unit (BBU) or a distributed unit (distributed unit, DU), that constitutes a gNB or a transmission point. When the network device is a base station, the network device may be a macro base station, a micro base station, a small cell, or a pole site. The network device may be a network device that supports receiving of data transmitted through transmission communication, or may be a network device that supports sending of a wake-up signal.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having wireless sending and receiving functions, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a smart wearable device (smart glasses, a smartwatch, a smart headset, or the like), a wireless terminal in a smart home (smart home), a machine type communication terminal device, or the like. The terminal device may be a terminal device that supports a wake-up receiver, or may be a terminal device that does not support a wake-up receiver. The terminal device may be a terminal device that supports reflective communication, for example, a tag. Alternatively, the terminal device may be a chip, a chip module (or a chip system), or the like that can be disposed in the foregoing device. An application scenario is not limited in embodiments of this application. A terminal device having wireless receiving and sending functions and a chip that can be disposed in the terminal device are collectively referred to as the terminal device in this application.

The architecture of the communication system and the scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

Currently, when a terminal device needs to receive downlink data, the terminal device usually performs blind detection on control information of the downlink data, and receives the downlink data based on the control information of the downlink data after blindly detecting the control information of the downlink data. However, this may affect transmission efficiency of the downlink data.

A backscatter communication system and a wake-up system are usually asynchronous systems, that is, a terminal device and a network device are not strictly synchronized. Therefore, currently, a synchronization signal (or a preamble) is inserted before valid data of a downlink signal, so that the terminal device completes downlink signal detection and frame synchronization functions. In an embodiment, to reduce blind detection performed by the terminal device on control information of downlink data, the control information of the downlink data may be carried in a synchronization signal, so that the terminal device can accurately receive the control information of the downlink data, thereby improving transmission efficiency of the downlink data.

However, if the foregoing method is used, the terminal device is in an unsynchronized state when receiving the synchronization signal, and needs to perform a large quantity of operations to achieve time synchronization. When the control information of the downlink data is carried in the synchronization signal, related operation complexity increases, and synchronization complexity of the terminal device may increase. For example, the control information of the downlink data carried in the synchronization signal occupies N bits, and related operation complexity of the terminal device may increase by 2N times.

Based on this, embodiments of this application provide a communication method, so that control information of downlink data can be flexibly and accurately sent and received without increasing synchronization complexity, to improve transmission efficiency of the downlink data.

For ease of understanding of the technical solutions in embodiments of this application, the following explains and describes technical terms in embodiments of this application.

(1) Line coding: is used to eliminate or reduce a direct-current component and a low-frequency component in a digital electrical signal, to facilitate transmission, reception, and monitoring on a wired/wireless channel.

(2) Modulation symbol sequence: may be a sequence including one or more modulation symbols.

(3) Modulation depth: may be defined as D=(A-B)/A, where A represents a maximum value of an envelope of a signal, and B represents a minimum value of the envelope of the signal. For example, a diagram of a signal envelope may be shown in FIG. 1b below.

(4) Envelope ripple: represents amplitude fluctuations Mh and Ml of a radio frequency signal envelope at a high level or a low level, where Mh represents a value of an upward amplitude fluctuation, and Ml represents a value of a downward amplitude fluctuation.

It should be noted that in embodiments of this application, an example in which a first device receives control information of downlink data and a second device sends the control information of the downlink data is used for description. It should be understood that an operation performed by the first device may alternatively be implemented by a processor, a chip, a chip system, a functional module, or the like in the first device. An operation performed by the second device may alternatively be implemented by a processor, a chip, a chip system, a functional module, or the like in the second device. This is not limited in this application. For example, the first device may be a reader or a reader (Reader), and a form of the first device may be a network device or a terminal device. The second device may be a tag (Tag), and a form of the second device may be a terminal device. This is not limited in this application.

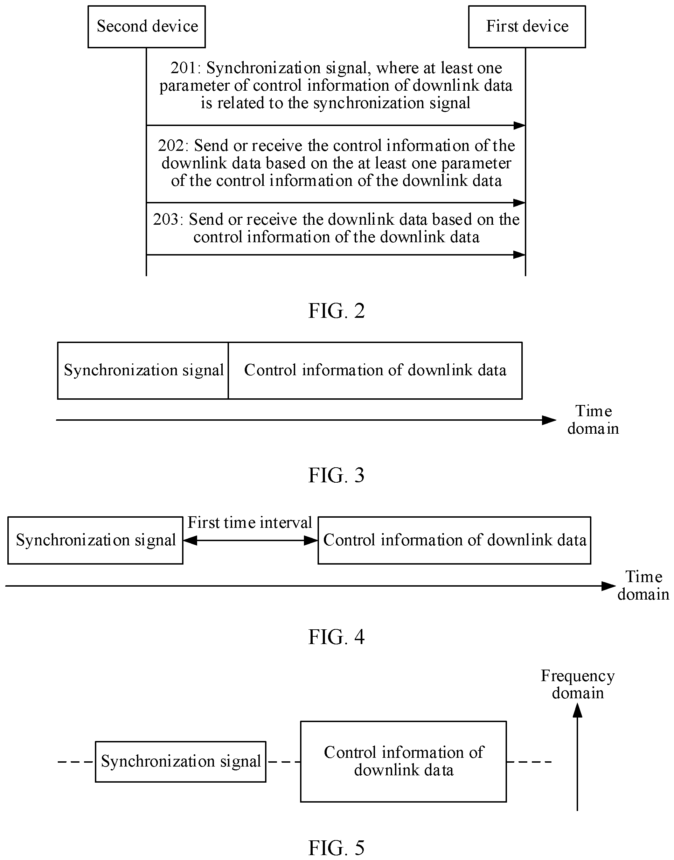

Based on the foregoing description, for a method for sending and receiving control information of downlink data provided in an embodiment of this application, refer to FIG. 2. A specific procedure of the method may include the following steps.

Step 201: A second device sends a synchronization signal to a first device, and correspondingly, the first device receives the synchronization signal from the second device. At least one parameter of control information of downlink data is related to the synchronization signal, and the at least one parameter may include a resource position of the control information of the downlink data or a first parameter of the control information of the downlink data. The control information of the downlink data may be used to schedule the downlink data.

A function of the synchronization signal may include one or more of the following functions: automatic gain control (automatic gain control, AGC), time synchronization, frequency synchronization, data packet detection, boundary detection, or the like. AGC may be used to adjust strength of a received signal to reduce distortion. Time synchronization may be used to obtain correct timing or sampling timing. Boundary detection may be used to detect a boundary of a preamble sequence and/or a boundary of downlink data.

The synchronization signal may also be referred to as a preamble (preamble). In time domain, the synchronization signal may be before the control information of the downlink data, and the control information of the downlink data may be before the downlink data. A time domain resource used to transmit the synchronization signal and a time domain resource used to transmit the control information of the downlink data may be consecutive or inconsecutive. The time domain resource used to transmit the control information of the downlink data and a time domain resource used to transmit the downlink data may be consecutive or inconsecutive.

That the at least one parameter of the control information of the downlink data is related to the synchronization signal may be understood as that the at least one parameter of the control information of the downlink data may be determined based on the synchronization signal.

In an optional implementation, that the resource position of the control information of the downlink data is related to the synchronization signal may include the following three cases.

Case a1: A time domain position of the control information of the downlink data is determined based on a time domain position of the synchronization signal.

In case a1, a frequency domain position of the control information of the downlink data may be preset, or may be determined in another manner. This is not limited in this application.

Case a2: A frequency domain position of the control information of the downlink data is determined based on a frequency domain position of the synchronization signal.

In case a2, a time domain position of the control information of the downlink data may be preset, or may be determined in another manner. This is not limited in this application.

Case a3: A time domain position of the control information of the downlink data is determined based on a time domain position of the synchronization signal, and a frequency domain position of the control information of the downlink data is determined based on a frequency domain position of the synchronization signal.

Optionally, in the foregoing three cases, when the time domain position of the control information of the downlink data is determined based on the time domain position of the synchronization signal, the time domain position of the control information of the downlink data may be determined based on the time domain position of the synchronization signal in the following manners.

Manner b1: A start time domain position of the control information of the downlink data is adjacent to an end time domain position of the synchronization signal, as shown in FIG. 3.

Manner b1 may also be understood as that there is no interval between the start time domain position of the control information of the downlink data and the end time domain position of the synchronization signal. Alternatively, manner b1 may be understood as that the control information of the downlink data and the synchronization signal occupy consecutive time domain resources.

In this application, the time domain resource occupied by the control information of the downlink data is a time domain resource used by the first device to receive the control information of the downlink data, and a time domain resource used by the second device to send the control information of the downlink data. The time domain resource occupied by the synchronization signal is a time domain resource used by the first device to receive the synchronization signal, and a time domain resource used by the second device to send the synchronization signal.

Manner b2: There is a first time interval between a start time domain position of the control information of the downlink data and an end time domain position of the synchronization signal, as shown in FIG. 4.

For example, the first time interval is preset. Alternatively, the first time interval is configured by the second device, that is, the first time interval is notified by the second device to the first device. Alternatively, the first time interval is related to a parameter of the synchronization signal, that is, the first time interval may be determined based on the synchronization signal, and the parameter of the synchronization signal may include one or more of the following: a sequence of the synchronization signal, a length of the synchronization signal, a quantity of repetitions of the synchronization signal, or a spreading factor of the synchronization signal. That the first time interval is related to the parameter of the synchronization signal may be specifically that there is an association relationship between different values of the parameter of the synchronization signal and different time intervals, and the first time interval corresponds to some specific values of the parameter of the synchronization signal. For example, different sequences of the synchronization signal, different lengths of the synchronization signal, different quantities of repetitions of the synchronization signal, or different spreading factors of the synchronization signal are associated with (corresponding to) different time intervals.

Optionally, when the first time interval is 0, it may be understood as the case in manner b1.

It should be noted that, in this application, content of the parameter of the synchronization signal is one or more of the foregoing, and other related parts are not described one by one.

Manner b3: There is a second time interval between a start time domain position of the control information of the downlink data and a start time domain position of the synchronization signal.

For example, the second time interval is preset. Alternatively, the second time interval is configured by the second device, that is, the second time interval is notified by the second device to the first device. Alternatively, the second time interval is related to a parameter of the synchronization signal, that is, the second time interval may be determined based on the synchronization signal. For the parameter of the synchronization signal, refer to the descriptions in manner b2.

Manner b4: There is a third time interval between an end time domain position of the control information of the downlink data and an end time domain position of the synchronization signal.

For example, the third time interval is preset. Alternatively, the third time interval is configured by the second device, that is, the third time interval is notified by the second device to the first device. Alternatively, the third time interval is related to a parameter of the synchronization signal, that is, the third time interval may be determined based on the synchronization signal. For the parameter of the synchronization signal, refer to the descriptions in manner b2.

It should be noted that, in addition to manner b1 to manner b4, there may further be a plurality of manners for implementation, which are not described one by one in this application.

Optionally, in the foregoing three cases, when the frequency domain position of the control information of the downlink data is determined based on the frequency domain position of the synchronization signal, the frequency domain position of the control information of the downlink data may be determined based on the frequency domain position of the synchronization signal in the following manners.

Manner c1: A center frequency of a frequency domain resource of the control information of the downlink data is the same as a center frequency of a frequency domain resource of the synchronization signal, and a bandwidth of the control information of the downlink data is different from a bandwidth of the synchronization signal, as shown in FIG. 5.

In this application, the frequency domain resource of the control information of the downlink data is a frequency domain resource used by the first device to receive the control information of the downlink data, and a frequency domain resource used by the second device to send the control information of the downlink data. The frequency domain resource of the synchronization signal is a frequency domain resource used by the first device to receive the synchronization signal, and a frequency domain resource used by the second device to send the synchronization signal.

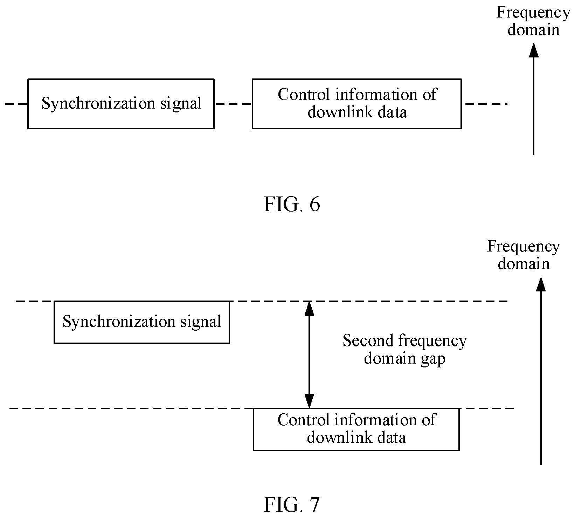

Manner c2: A frequency domain resource of the control information of the downlink data is the same as a frequency domain resource of the synchronization signal, as shown in FIG. 6.

Manner c2 may also be understood as that a center frequency of a frequency domain resource of the control information of the downlink data is the same as a center frequency of a frequency domain resource of the synchronization signal, and a bandwidth of the control information of the downlink data is the same as a bandwidth of the synchronization signal.

Manner c3: There is a first frequency domain gap between a start frequency domain position of the control information of the downlink data and an end frequency domain position of the synchronization signal.

For example, the first frequency domain gap may be preset. Alternatively, the first frequency domain gap may be configured by the second device, that is, the first frequency domain gap is notified by the second device to the first device. Alternatively, the first frequency domain gap is related to a parameter of the synchronization signal, that is, the first frequency domain gap may be determined based on the synchronization signal.

That the first frequency domain gap is related to the parameter of the synchronization signal may be specifically that there is an association relationship between different values of the parameter of the synchronization signal and different frequency domain gaps, and the first frequency domain gap corresponds to some specific values of the parameter of the synchronization signal. For example, different sequences of the synchronization signal, different lengths of the synchronization signal, different quantities of repetitions of the synchronization signal, or different spreading factors of the synchronization signal are associated with (corresponding to) different frequency domain gaps.

Optionally, the first frequency domain gap may be 0. In this case, it may be understood that the frequency domain resource of the control information of the downlink data and the frequency domain resource of the synchronization signal are consecutive or adjacent.

Manner c4: There is a second frequency domain gap between a start frequency domain position of the control information of the downlink data and a start frequency domain position of the synchronization signal, as shown in FIG. 7.

For example, the second frequency domain gap may be preset. Alternatively, the second frequency domain gap may be configured by the second device, that is, the second frequency domain gap is notified by the second device to the first device. Alternatively, the second frequency domain gap is related to a parameter of the synchronization signal, that is, the second frequency domain gap may be determined based on the synchronization signal.

Manner c5: There is a third frequency domain gap between an end frequency domain position of the control information of the downlink data and an end frequency domain position of the synchronization signal.

For example, the third frequency domain gap may be preset. Alternatively, the third frequency domain gap may be configured by the second device, that is, the third frequency domain gap is notified by the second device to the first device. Alternatively, the third frequency domain gap is related to a parameter of the synchronization signal, that is, the third frequency domain gap may be determined based on the synchronization signal.

It should be noted that, in addition to manner c1 to manner c5, there may further be a plurality of manners for implementation, which are not described one by one in this application.

In a possible implementation, a quantity of bits of the control information of the downlink data may be less than X, a cyclic redundancy check (cyclic redundancy check, CRC) is not used for the control information of the downlink data, and X may be a positive integer. Optionally, when a CRC is not used for the control information of the downlink data, a CRC may be used for the downlink data.

It should be noted that, in this application, that a CRC is not used may also be understood as that a CRC is not added, and that a CRC is used may also be understood as that a CRC is added.

In an example, X may be a positive integer less than or equal to 12. For example, X may be 2, 3, 4, 5, 6, 7, 8, 9, 10, 11, 12, or the like.

In another possible implementation, a CRC may be used for the control information of the downlink data, a CRC may also be used for the downlink data, a quantity of bits corresponding to the CRC used for the control information of the downlink data is L1, a quantity of bits corresponding to the CRC used for the downlink data is L2, and L1 and L2 may be different positive integers, or may be a same positive integer.

In an example, L1 is 6, and L2 is 16 or 24. To be specific, the quantity of bits corresponding to the CRC used for the control information of the downlink data is 6, and the quantity of bits corresponding to the CRC used for the downlink data is 16. In this way, a subsequent CRC polynomial can reuse a current CRC polynomial, thereby simplifying an implementation.

In another example, L1 may be determined based on the quantity of bits of the control information of the downlink data. For example, when the quantity of bits of the control information of the downlink data is less than or equal to a first value, L1 may be 6 or the like; or when the quantity of bits of the control information of the downlink data is greater than the first value, L1 may be 11 or the like. Optionally, in this case, the quantity of bits corresponding to the CRC used for the downlink data may be 16 or the like.

When the quantity of bits corresponding to the CRC used for the control information of the downlink data or the downlink data is a specific value, the value may correspond to a generator polynomial of the same CRC. For example, when the quantity of bits corresponding to the CRC is 16, the generator polynomial of the CRC may be $g_{CRC16}(D) = [D^{16} + D^{12} + D^5 + 1]$. When the quantity of bits corresponding to the CRC is 11, the generator polynomial of the CRC may be $g_{CRC11}(D) = [D^{11} + D^{10} + D^9 + D^5 + 1]$. When the quantity of bits corresponding to the CRC is 6, the generator polynomial of the CRC may be $g_{CRC6}(D) = [D^6 + D^5 + 1]$.

In an optional implementation, the control information of the downlink data and the downlink data may support channel coding, and a channel coding type supported by the control information of the downlink data is the same as a channel coding type supported by the downlink data. For example, both the control information of the downlink data and the downlink data may use a polar (polar) code.

In an optional implementation, the control information of the downlink data may use a block code (block code). A quantity of to-be-coded bits of the control information of the downlink data may be denoted as K, a to-be-coded bit sequence of the control information of the downlink data may be denoted as $c_0, c_1, c_2, c_3, \ldots, c_{K-1}$, and a coded bit sequence of the control information of the downlink data may be denoted as $d_0, d_1, d_2, d_3, \ldots, d_{N-1}$, where N is a quantity of coded bits of the control information of the downlink data.

When K = 1, the to-be-coded bit sequence of the control information of the downlink data is $c_0$, N = 1, and the coded bit sequence of the control information of the downlink data is $d_0 = c_0$. Alternatively, the to-be-coded bit sequence of the control information of the downlink data is $c_0$, and the coded bit sequence of the control information of the downlink data may be determined according to Table 1 below, where N = $Q_m$, and $Q_m$ is a modulation order of the control information of the downlink data.

**Table 1**

| $Q_m$ | Coded bit $d_0, d_1, d_2, d_3, \ldots, d_{N-1}$ |
|---|---|
| 1 | $[c_0]$ |
| 2 | $[c_0\ y]$ |
| 4 | $[c_0\ y\ x\ x]$ |
| 6 | $[c_0\ y\ x\ x\ x\ x]$ |
| 8 | $[c_0\ y\ x\ x\ x\ x\ x\ x]$ |

In Table 1, "x" and "y" are placeholders (placeholders), and are mainly used to maximize a Euclidean distance of a modulation symbol that carries an information bit.

When K = 2, the to-be-coded bit sequence of the control information of the downlink data is $c_0, c_1$, N = 3, and the coded bit sequence of the control information of the downlink data is $d_0 = c_0, d_1 = c_1$, and $d_2 = c_2$, where $c_2 = (c_0 + c_1)\ \text{mod}\ 2$. Alternatively, the to-be-coded bit sequence of the control information of the downlink data is $c_0, c_1$, and the coded bit sequence of the control information of the downlink data may be determined according to Table 2 below, where N = $3Q_m$, and $Q_m$ is a modulation order of the control information of the downlink data.

**Table 2**

| $Q_m$ | Coded bit $d_0, d_1, d_2, d_3, \ldots, d_{N-1}$ |
|---|---|
| 1 | $[c_0\ c_1\ c_2]$ |
| 2 | $[c_0\ c_1\ c_2\ c_0\ c_1\ c_2]$ |

(continued)

| $Q_m$ | Coded bit $d_0, d_1, d_2, d_3, ... , d_{N-1}$ |
|---|---|
| 4 | [$c_0$ $c_1$ x x $c_2$ $c_0$ x x $c_1$ $c_2$ x x] |
| 6 | [$c_0$ $c_1$ x x x x $c_2$ $c_0$ x x x x $c_1$ $c_2$ x x x x] |
| 8 | [$c_0$ $c_1$ x x x x x x $c_2$ $c_0$ x x x x x x $c_1$ $c_2$ x x x x x x] |

In Table 2, "x" is a placeholder (placeholders), and is mainly used to maximize a Euclidean distance of a modulation symbol that carries an information bit.

When $3 \leq K \leq 11$, the coded bit sequence of the control information of the downlink data satisfies:

$$d_i = \left(\sum_{k=0}^{K-1} c_k \cdot M_{i,k}\right) \bmod 2$$

, where i = 0,1,..., N - 1, N = 32, $M_{i,k}$ represents a basic sequence, and $M_{i,k}$ is determined according to Table 3 below.

**Table 3**

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 1 | 0 | 0 | 0 | 0 | 0 | 0 | 0 | 0 | 1 |
| 1 | 1 | 1 | 1 | 0 | 0 | 0 | 0 | 0 | 0 | 1 | 1 |
| 2 | 1 | 0 | 0 | 1 | 0 | 0 | 1 | 0 | 1 | 1 | 1 |
| 3 | 1 | 0 | 1 | 1 | 0 | 0 | 0 | 0 | 1 | 0 | 1 |
| 4 | 1 | 1 | 1 | 1 | 0 | 0 | 0 | 1 | 0 | 0 | 1 |
| 5 | 1 | 1 | 0 | 0 | 1 | 0 | 1 | 1 | 1 | 0 | 1 |
| 6 | 1 | 0 | 1 | 0 | 1 | 0 | 1 | 0 | 1 | 1 | 1 |
| 7 | 1 | 0 | 0 | 1 | 1 | 0 | 0 | 1 | 1 | 0 | 1 |
| 8 | 1 | 1 | 0 | 1 | 1 | 0 | 0 | 1 | 0 | 1 | 1 |
| 9 | 1 | 0 | 1 | 1 | 1 | 0 | 1 | 0 | 0 | 1 | 1 |
| 10 | 1 | 0 | 1 | 0 | 0 | 1 | 1 | 1 | 0 | 1 | 1 |
| 11 | 1 | 1 | 1 | 0 | 0 | 1 | 1 | 0 | 1 | 0 | 1 |
| 12 | 1 | 0 | 0 | 1 | 0 | 1 | 0 | 1 | 1 | 1 | 1 |
| 13 | 1 | 1 | 0 | 1 | 0 | 1 | 0 | 1 | 0 | 1 | 1 |
| 14 | 1 | 0 | 0 | 0 | 1 | 1 | 0 | 1 | 0 | 0 | 1 |
| 15 | 1 | 1 | 0 | 0 | 1 | 1 | 1 | 1 | 0 | 1 | 1 |
| 16 | 1 | 1 | 1 | 0 | 1 | 1 | 1 | 0 | 0 | 1 | 0 |
| 17 | 1 | 0 | 0 | 1 | 1 | 1 | 0 | 0 | 1 | 0 | 0 |
| 18 | 1 | 1 | 0 | 1 | 1 | 1 | 1 | 1 | 0 | 0 | 0 |
| 19 | 1 | 0 | 0 | 0 | 0 | 1 | 1 | 0 | 0 | 0 | 0 |
| 20 | 1 | 0 | 1 | 0 | 0 | 0 | 1 | 0 | 0 | 0 | 1 |
| 21 | 1 | 1 | 0 | 1 | 0 | 0 | 0 | 0 | 0 | 1 | 1 |
| 22 | 1 | 0 | 0 | 0 | 1 | 0 | 0 | 1 | 1 | 0 | 1 |
| 23 | 1 | 1 | 1 | 0 | 1 | 0 | 0 | 0 | 1 | 1 | 1 |
| 24 | 1 | 1 | 1 | 1 | 1 | 0 | 1 | 1 | 1 | 1 | 0 |
| 25 | 1 | 1 | 0 | 0 | 0 | 1 | 1 | 1 | 0 | 0 | 1 |
| 26 | 1 | 0 | 1 | 1 | 0 | 1 | 0 | 0 | 1 | 1 | 0 |
| 27 | 1 | 1 | 1 | 1 | 0 | 1 | 0 | 1 | 1 | 1 | 0 |

(continued)

| i | $M_{i,0}$ | $M_{i,1}$ | $M_{i,2}$ | $M_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 28 | 1 | 0 | 1 | 0 | 1 | 1 | 1 | 0 | 1 | 0 | 0 |
| 29 | 1 | 0 | 1 | 1 | 1 | 1 | 1 | 1 | 1 | 0 | 0 |
| 30 | 1 | 1 | 1 | 1 | 1 | 1 | 1 | 1 | 1 | 1 | 1 |
| 31 | 1 | 0 | 0 | 0 | 0 | 0 | 0 | 0 | 0 | 0 | 0 |

When the control information of the downlink data supports channel coding, the control information of the downlink data may include a field indicating a transport block size of the downlink data or a field indicating a code block size of the downlink data.

In an optional implementation, that the first parameter of the control information of the downlink data is related to the synchronization signal may be understood as that the first parameter of the control information of the downlink data may be determined based on the synchronization signal. Specifically, the first parameter of the control information of the downlink data may be determined based on a parameter of the synchronization signal. For example, there is a correspondence between one or more of the sequence of the synchronization signal, the length of the synchronization signal, the quantity of repetitions of the synchronization signal, or the spreading factor of the synchronization signal and the first parameter of the control information of the downlink data. One or more of different sequences of the synchronization signal, different lengths of the synchronization signal, different quantities of repetitions of the synchronization signal, or different spreading factors of the synchronization signal may correspond to values of different first parameters of the control information of the downlink data.

For example, the first parameter of the control information of the downlink data may include one or more of the following: a bandwidth of the control information of the downlink data, a subcarrier spacing of the control information of the downlink data, a cyclic prefix (cyclic prefix, CP) type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle (duty cycle) of the control information of the downlink data.

For example, Table 4 shows an example of a correspondence between a first parameter of control information of downlink data and a synchronization sequence.

**Table 4**

| Index | Sequence of a synchronization signal | First parameter of control information of downlink data |
|---|---|---|
| Sequence 1 | [W] | 1 RB, Manchester (Manchester) coding, polar coding, code rate = 1, OOK, quantity of repetitions = 1 |
| Sequence 2 | [W' W'] | 1 RB, Manchester coding, polar coding, code rate = 1/4, OOK, quantity of repetitions = 8 |
| Sequence 3 | [W' W W' W] | 1 RB, Manchester coding, polar coding, code rate = 1/4, OOK, quantity of repetitions = 64 |

In Table 4, when the synchronization signal is the sequence 1, that is, [W] (where W is a sequence, and an element of the sequence may be 0 or 1, or an element of the sequence is +1 or -1, or an element of the sequence is a complex number a+bj, where $j^2$=-1, and a and b are real numbers, for example, W = [0 1 0 1 1 0]), the bandwidth of the control information of the downlink data is one resource block (resource block, RB), Manchester (Manchester) coding is used for the control information of the downlink data, a polar (polar) code is used for the control information of the downlink data, a code rate of the polar code is 1, an OOK modulation scheme is used for the control information of the downlink data, and the quantity of repetitions of the control information of the downlink data is 1. When the synchronization signal is the sequence 2, that is, [W, W'] (where W is similar to the foregoing description, and details are not described again), W' is obtained through preset transformation on W. For example, W' is obtained by negating W element by element. For example, W = [0 1 0 1 1 0], and W' = [1 0 1 0 0 1]. In this case, the sequence 2 is [W' W'] = [1 0 1 0 0 1 1 0 1 0 0 1]. The bandwidth of the control information of the downlink data is one RB, Manchester coding is used for the control information of the downlink data, a polar code is used for the control information of the downlink data, a code rate of the polar code is 1/4, an OOK modulation scheme is used for the control information of the downlink data, and the quantity of repetitions of the control information of the downlink data is 8. When the synchronization signal is the sequence 3, that is, [W' W W' W] (where W is similar to the foregoing description, and details are not described again), W' is obtained through preset transformation on W. For example, W' is obtained by negating W element by element. For example, W = [0 1 0 1 1 0], and W' = [1 0 1 0 0 1]. In this case, the sequence 3 is [W' W W' W] = [1 0 1 0 0 1 0 1 0 1 1 0 1 0 1 0 0 1 0 1 0 1 1 0]. The bandwidth of the control information of the downlink data is one RB, Manchester coding is used for the control information of the downlink data, a polar code is used for the control information of the downlink data, a code rate of the polar code is 1/4, an OOK modulation scheme is used for the control information of the downlink data, and the quantity of repetitions of the control information of the downlink data is 64.

It should be noted that Table 4 is merely an example, and is not intended to limit this application.

It should be noted that Table 4 shows that one sequence of the synchronization signal corresponds to one group of first parameters of the control information of the downlink data. Optionally, one sequence of the synchronization signal may alternatively correspond to a plurality of groups of first parameters of the control information of the downlink data. After receiving the synchronization signal subsequently, the first device may perform blind detection based on the plurality of groups of first parameters of the control information of the downlink data, to receive the control information of the downlink data sent by the second device.

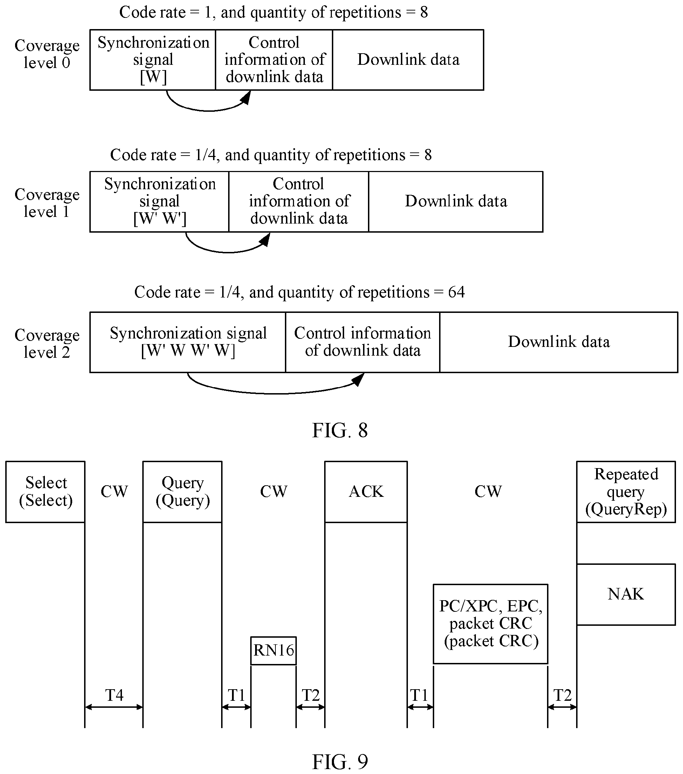

In an optional implementation, a coverage level of the synchronization signal corresponds to a parameter of the synchronization signal. For example, different sequences of the synchronization signal, different lengths of the synchronization signal, different quantities of repetitions of the synchronization signal, or different spreading factors of the synchronization signal may correspond to different coverage levels of the synchronization signal. The coverage level may also be replaced with another description such as a repetition level, a coverage enhancement level, or an enhanced coverage level. In this application, only the coverage level is used as an example for description. For example, FIG. 8 is a diagram of an association relationship between control information of downlink data and synchronization signals at different repetition levels.

For example, the control information of the downlink data may include one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data.

In a possible manner, a value range of a second parameter in the control information of the downlink data is related to a parameter of the synchronization signal, that is, the value range of the second parameter in the control information of the downlink data is determined based on the parameter of the synchronization signal. The second parameter in the control information of the downlink data may include one or more of the following: the quantity of repetitions of the downlink data, the modulation scheme of the downlink data, the channel coding parameter of the downlink data, the line code parameter of the downlink data, or the like. Optionally, the second parameter may be understood as a control parameter, or may be understood as a coverage related parameter. The value range may also be, for example, a value set.

For example, the second parameter is the quantity of repetitions of the downlink data. Assuming that the synchronization signal has three coverage levels: a coverage level 0, a coverage level 1, and a coverage level 2, a value set of the quantity of repetitions of the downlink data may be determined based on the coverage level of the synchronization signal. For example, if the coverage level of the synchronization signal is the coverage level 0, the value set of the quantity of repetitions of the downlink data that is indicated in the control information of the downlink data may be { 1, 2, 4, 8}. If the coverage level of the synchronization signal is the coverage level 1, the value set of the quantity of repetitions of the downlink data that is indicated in the control information of the downlink data may be {4, 8, 16, 32}. If the coverage level of the synchronization signal is the coverage level 2, the value set of the quantity of repetitions of the downlink data that is indicated in the control information of the downlink data may be { 16, 32, 64, 128}. Generally, regardless of the coverage level of the synchronization signal, the value set of the quantity of repetitions of the downlink data is based on a solution of { 1, 2, 4, 8, 16, 32, 64, 128}, and 3 bits are required for the control information of the downlink data to indicate the quantity of repetitions of the downlink data. However, in this embodiment of this application, the value set of the quantity of repetitions of the downlink data may be determined based on the synchronization signal, and only 2 bits are required for the control information of the downlink data to indicate the quantity of repetitions of the downlink data, so that signaling overheads for indicating the quantity of repetitions of the downlink data by the control information of the downlink data can be reduced.

Optionally, the modulation scheme of the downlink data and the channel coding parameter of the downlink data may be jointly indicated. For example, the control information of the downlink data may indicate the modulation scheme of the downlink data and the channel coding parameter of the downlink data by using a first index. For example, the first index may be a modulation and coding scheme (modulation and coding scheme, MCS) index.

In an optional implementation, the control information of the downlink data may further include first indication information and/or second indication information; the first indication information may indicate whether channel coding is enabled for the downlink data; and the second indication information may indicate whether the downlink data has an end indicator.

In an example, when the control information of the downlink data indicates that channel coding is enabled for the downlink data, the control information of the downlink data may include information (a field or the like) used to determine an MCS of the downlink data or the channel coding parameter of the downlink data; or when the control information of the downlink data indicates that channel coding is not enabled for the downlink data, the control information of the downlink data may include information (a field or the like) used to determine the quantity of repetitions of the downlink data.

Optionally, the information used to determine the MCS of the downlink data or the channel coding parameter of the downlink data and the information used to determine the quantity of repetitions of the downlink data may occupy a same bit. For example, the same bit may be referred to as a first field.

For example, the first indication information may include 1 bit, and different values of the 1 bit indicate whether channel coding is enabled for the downlink data. For example, when a value of the 1 bit included in the first indication information is 1, it may indicate that channel coding is enabled for the downlink data; or when a value of the 1 bit included in the first indication information is 0, it may indicate that channel coding is not enabled for the downlink data. Table 5 shows a specific example of the first field and the first indication information in the control information of the downlink data.

**Table 5**

| Field | Content of control information of downlink data | |
|---|---|---|
| First indication information | Value (Value) = 1 indicating that channel coding is enabled for the downlink data | Value (Value) = 0 indicating that channel coding is not enabled for the downlink data |
| First field | Quantity of repetitions of the downlink data | MCS of the downlink data |

In another example, when the second indication information indicates that the downlink data does not have an end indicator, the control information of the downlink data may include a field indicating a transport block size of the downlink data or a field indicating a code block size of the downlink data; or when the second indication information indicates that the downlink data has an end indicator, the control information of the downlink data may include a field indicating an MCS of the downlink data or a field indicating the quantity of repetitions of the downlink data.

Optionally, the transport block size or the code block size and the MCS of the downlink data or the quantity of repetitions of the downlink data may occupy a same bit. For example, the same bit may be referred to as a second field.

For example, the second indication information may include 1 bit, and different values of the 1 bit indicate whether the downlink data has an end indicator. For example, when a value of the 1 bit included in the second indication information is 1, it may indicate that the downlink data does not have an end indicator; or when a value of the 1 bit included in the first indication information is 0, it may indicate that the downlink data has an end indicator. Table 6 shows a specific example of the second field and the second indication information in the control information of the downlink data.

**Table 6**

| Field | Content of control information of downlink data | |
|---|---|---|
| Second indication information | Value (Value) = 1 indicating that the downlink data does not have an end indicator | Value (Value) = 0 indicating that the downlink data has an end indicator |
| Second field | Transport block size | MCS |

Optionally, when the first indication information and the second indication information do not exist at the same time, the first field and the second field may be a same bit, or may be different bits. This is not limited in this application.

Step 202: The second device sends the control information of the downlink data to the first device based on the at least one parameter of the control information of the downlink data. Correspondingly, the first device receives the control information of the downlink data from the second device based on the at least one parameter of the control information of the downlink data.

For example, the second device first determines the at least one parameter of the control information of the downlink data based on the synchronization signal, and then sends the control information of the downlink data to the first device based on the at least one parameter of the control information of the downlink data. The first device may first determine the at least one parameter of the control information of the downlink data based on the synchronization signal, and then receive the control information of the downlink data from the second device based on the at least one parameter of the control information of the downlink data.

Optionally, the control information of the downlink data may be carried by using a physical downlink control channel (physical downlink control channel, PDCCH), or may be carried by using other information, signaling, or the like. This is not limited in this application.

Step 203: The second device sends the downlink data to the first device based on the control information of the downlink data. Correspondingly, the first device receives the downlink data from the second device based on the control information of the downlink data.

Optionally, the downlink data may be carried by using a physical downlink shared channel (physical downlink shared channel, PDSCH) or a PDCCH. For example, the downlink data may be application layer data and/or control signaling. The control signaling may be one or more of radio resource control (radio resource control, RRC) signaling, a media access control control element (media access control control element, MAC CE), or a MAC protocol data unit (protocol data unit, PDU).

In an optional implementation, if the second device determines that a coverage level of a synchronization signal corresponding to downlink data after the downlink data needs to be updated, the second device sends first information to the first device, where the first information indicates the coverage level of the synchronization signal corresponding to the downlink data after the downlink data. Correspondingly, the first device receives the first information from the second device, so that the first device may determine, based on the first information, the coverage level of the synchronization signal corresponding to the downlink data after the downlink data.

Currently, in a passive internet of things system, a reader (Reader) sends a continuous waveform including a high level to a passive tag (Tag). After receiving energy, the tag reflects information to a receiver (Receiver) through a reverse link. In the radio frequency identification (radio frequency identification, RFID) air interface protocol ISO 18000-6C, it is defined that tag reflection uses a dynamic slot ALOHA technology. As shown in FIG. 9, a communication process between the reader and the tag may be as follows:

(1) Tag selection process: The reader first sends select (Select) signaling, to select a specific tag/tag group for inventory and access by using the select signaling. Parameters of the select signaling may include a target (Target), an action (Action), a memory position (Membank), a pointer (Pointer), a length (Length), a mask (Mask), and truncate (Truncate). Specific meanings of the parameters may be shown in Table 7 below.

**Table 7**

|  | Command code | Target | Action | Membank | Pointer | Length | Mask | Truncate | CRC-16 |
|---|---|---|---|---|---|---|---|---|---|
| Quantity of bits | 4 | 3 | 3 | 2 | EBV | 8 | Variable (Variable) | 1 | 16 |
| Description | 1010 | 000: inventoried (S0)<br><br>001: inventoried (S1)<br><br>010: inventoried (S2)<br><br>011: inventoried (S3)<br><br>100: SL<br><br>101: RFU<br><br>110: RFU<br><br>111: RFU | See table 19 | 00: RFU<br>01: EPC<br>10: TID<br>11: User | Starting mask address | Mask length (bits) | Mask value | 0: disable truncation<br><br>1: enable truncation | |

(2) Tag inventory process: The tag receives query (Query) signaling from the reader, where a parameter of the query signaling includes Q. A to-be-inventoried tag selects a random number from a range of (0, $2^Q$-1) and loads the random number into a slot counter of the tag. In this case, a tag that selects a non-0 value is transferred to an arbitration state, and a tag that selects a value 0 enters a response state, and replies with RN16. Then, the reader replies with an acknowledgement (acknowledgement character, ACK) command including the same RN16 to acknowledge the tag. The acknowledged tag is transferred to an acknowledged state, and replies with a program counter (program counter, PC), an electronic product code (electronic product code, EPC), and CRC-16 of the tag to complete a basic information inventory process of the tag. When an identified tag receives repeated query (QueryRep) or adjustment query (QueryAdjust) signaling, an inventory flag (A→B or B→A) of the tag is set to the reverse, the tag is transferred to a ready state, and the inventory process ends.

The previous query operation is repeated for the QueryRep signaling without changing any parameter. Each time the tag in the arbitration state receives a piece of QueryRep signaling, a value of a slot counter of the tag is decreased by 1. In this case, a tag whose value of a slot counter is decreased to 0 repeats the same response process as the above. The previous query operation is repeated for QueryAdjust signaling, and Q may be increased or decreased. In addition, if the tag in the arbitration state receives a piece of QueryAdjust signaling, a value of Q is adjusted, and then a random number is re-selected from the range of $(0, 2^Q-1)$ and loaded into a slot counter of the tag. In this case, a tag that selects a non-0 value is transferred to the arbitration state, and a tag that selects a value 0 enters the response state.

Based on the foregoing procedure, optionally, that the second device determines that the coverage level of the synchronization signal corresponding to the downlink data after the downlink data needs to be updated may include the following method: If the second device detects a conflict when receiving RN16, or the second device does not receive RN16 within specific duration, the second device may determine that the coverage level of the synchronization signal corresponding to the downlink data after the downlink data needs to be updated.

For example, when the second device sends the first information to the first device, the second device may notify the first device of the coverage level of the synchronization signal corresponding to the subsequent downlink data by reusing QueryRep signaling, new downlink signaling (whose name is not limited), or downlink control information (downlink control information, DCI).

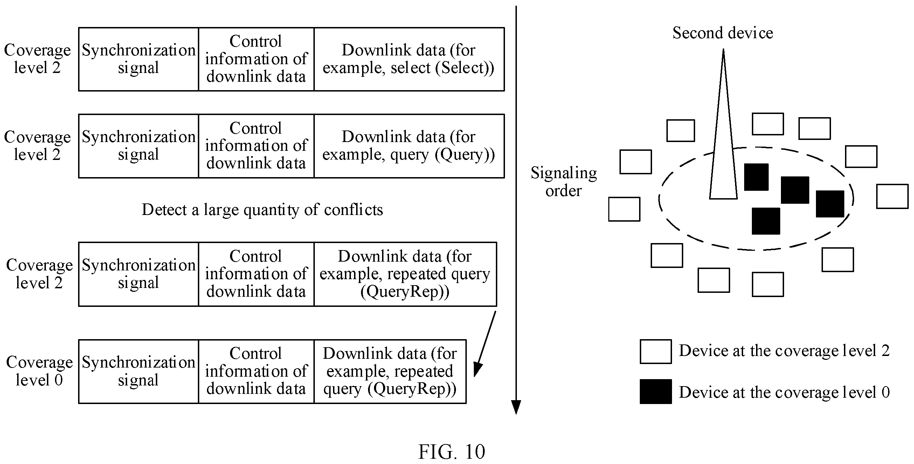

The foregoing coverage level update may also be referred to as coverage level switching. For example, based on the foregoing method, a diagram of coverage level switching may be shown in FIG. 10.

According to the foregoing method for sending and receiving control information of downlink data, sending and receiving of the control information of the downlink data are determined by using the synchronization signal, so that blind detection on the control information of the downlink data can be avoided, thereby improving transmission efficiency of the downlink data. In addition, the control information of the downlink data is not carried by using the synchronization signal, so that synchronization complexity can be further reduced.

For all embodiments of this application, in a possible implementation, for at least one of the downlink data, the control information of the downlink data, and the synchronization signal, a modulation scheme thereof may be on-off keying (on-off keying, OOK), multicarrier on-off keying (multicarrier on-off keying, MC-OOK), double-sideband amplitude-shift keying (double-sideband amplitude-shift keying, DSB-ASK), single-sideband amplitude-shift keying (single-sideband amplitude-shift keying, SSB-ASK), phase-reversal amplitude-shift keying (phase-reversal amplitude-shift keying, PR-ASK), multiple amplitude-shift keying (multiple amplitude-shift keying, MASK), frequency-shift keying (frequency-shift keying, FSK), Gaussian frequency-shift keying (Gaussian frequency-shift keying, GFSK), multiple frequency-shift keying (multiple frequency-shift keying, MFSK), binary phase-shift keying (binary phase-shift keying, BPSK), quadrature phase-shift keying (quadrature phase-shift keying, QPSK), pulse amplitude modulation (pulse amplitude modulation, PAM), pulse width modulation (pulse width modulation, PWM), pulse position modulation (pulse position modulation, PPM), pulse density modulation (pulse density modulation, PDM), or pulse code modulation (Pulse code modulation, PCM).

For all embodiments of this application, in a possible implementation, the first device may determine, by using the synchronization signal, whether there is a downlink control channel after the synchronization signal, where the downlink control channel may be used to carry the control information of the downlink data. Alternatively, the first device obtains first configuration information from the second device, where the first configuration information indicates whether there is a downlink control channel after the synchronization signal, and the downlink control channel may be used to carry the control information of the downlink data.

For all embodiments of this application, in a possible implementation, the first device may send capability information to the second device. Correspondingly, the second device may receive the capability information from the first device. The capability information includes at least one of the following: whether the first device supports a downlink control channel, whether the first device supports channel coding, a channel coding type supported by the first device, whether the first device supports a line code, a line code type supported by the first device, and whether the first device supports a hybrid automatic repeat request acknowledgement (hybrid automatic repeat request acknowledgement, HARQ-ACK) feedback. Whether the first device supports channel coding may be specifically whether the first device supports channel coding for downlink. The channel coding type supported by the first device may be specifically a channel coding type supported by the first device for downlink. Whether the first device supports the line code may be specifically whether the first device supports the line code for downlink. The line code type supported by the first device may be specifically a line code type supported by the first device for downlink. Whether the first device supports the HARQ-ACK feedback may be specifically whether the first device supports the HARQ-ACK feedback for downlink. The downlink may be a downlink control channel and/or a downlink data channel. It should be noted that, in the foregoing capability information, a plurality of types of capability information may be associated. For the plurality of types of associated capability information, the first device needs to report only one type of capability information in the plurality of types of associated capability information. In this manner, overheads of reporting the capability information by the first device can be reduced. In an example, whether the first device supports channel coding and whether the first device supports a downlink control channel may be associated. For example, if the first device reports capability information, and content of the capability information is that the first device supports channel coding, it indicates that the first device also supports the downlink control channel. If the first device reports capability information, and content of the capability information is that the first device does not support channel coding, it indicates that the first device does not support the downlink control channel either. In another example, whether the first device supports a HARQ-ACK feedback and whether the first device supports a control channel may be associated. For example, if the first device reports capability information, and content of the capability information is that the first device supports the HARQ-ACK feedback, it indicates that the first device also supports the downlink control channel. If the first device reports capability information, and content of the capability information is that the first device does not support the HARQ-ACK feedback, it indicates that the first device does not support the downlink control channel either.

For all embodiments of this application, in a possible implementation, the first device may send capability information to the second device. Correspondingly, the second device may receive the capability information from the first device. The capability information includes at least one of the following: the first device supports a downlink control channel, the first device supports channel coding, a channel coding type supported by the first device, a line code supported by the first device, a line code type supported by the first device, and the first device supports a HARQ-ACK feedback. That the first device supports channel coding may be specifically that the first device supports channel coding for downlink. The channel coding type supported by the first device may be specifically a channel coding type supported by the first device for downlink. That the first device supports the line code may be specifically that the first device supports the line code for downlink. The line code type supported by the first device may be specifically a line code type supported by the first device for downlink. That the first device supports the HARQ-ACK feedback may be specifically that the first device supports the HARQ-ACK feedback for downlink. The downlink may be a downlink control channel and/or a downlink data channel. If the first device does not send capability information to the second device, and the capability information indicates that the first device supports a downlink control channel, or if the second device does not receive capability information from the first device, and the capability information indicates that the first device supports a downlink control channel, it indicates that the first device does not support a downlink control channel. If the first device does not send capability information to the second device, and the capability information indicates that the first device supports channel coding, or if the second device does not receive capability information from the first device, and the capability information indicates that the first device supports channel coding, it indicates that the first device does not support channel coding. If the first device does not send capability information to the second device, and the capability information indicates that the first device supports a line code, or if the second device does not receive capability information from the first device, and the capability information indicates that the first device supports a line code, it indicates that the first device does not support a line code. If the first device does not send capability information to the second device, and the capability information indicates that the first device supports a HARQ-ACK feedback, or if the second device does not receive capability information from the first device, and the capability information indicates that the first device supports a HARQ-ACK feedback, it indicates that the first device does not support a HARQ-ACK feedback. It should be noted that, in the foregoing capability information, a plurality of types of capability information may be associated. For the plurality of types of associated capability information, the first device needs to report only one type of capability information in the plurality of types of associated capability information. In this manner, overheads of reporting the capability information by the first device can be reduced. In an example, that the first device supports channel coding and that the first device supports a downlink control channel may be associated. For example, if the first device reports capability information, and content of the capability information is that the first device supports channel coding, it indicates that the first device also supports the downlink control channel. In another example, that the first device supports a HARQ-ACK feedback and that the first device supports a control channel may be associated. For example, if the first device reports capability information, and content of the capability information is that the first device supports the HARQ-ACK feedback, it indicates that the first device also supports the downlink control channel.

For all embodiments of this application, in a possible implementation, the second device may send second configuration information to the first device. Correspondingly, the first device may receive the second configuration information from the second device. The second configuration information includes at least one of the following configuration information: whether to enable (enable) a downlink control channel, whether to enable channel coding, an enabled channel coding type, whether to enable a line code, an enabled line code type, and whether to enable a HARQ-ACK feedback. It should be understood that "enable (enable)" herein may also be expressed as "activate (activate)". Whether to enable channel coding may be specifically whether the second device enables channel coding for downlink. The enabled channel coding type may be specifically a channel coding type enabled by the second device for downlink. Whether to enable the line code may be specifically whether the second device enables the line code for downlink. The enabled line code type may be specifically a line code type enabled by the second device for downlink. Whether to enable the HARQ-ACK feedback may be specifically whether the second device enables the HARQ-ACK feedback for downlink. The downlink may be a downlink control channel and/or a downlink data channel. It should be noted that the foregoing plurality of types of configuration information may be associated. For the plurality of types of associated configuration information, the second device needs to send only one type of configuration information in the plurality of types of associated configuration information. In this manner, overheads of sending the second configuration information by the second device can be reduced. In an example, whether to enable channel coding and whether to enable a downlink control channel may be associated. For example, if the second device sends second configuration information, and content included in the second configuration information is enabling channel coding, it indicates that the second device also enables the downlink control channel. If the second device sends second configuration information, and content of the second configuration information is that channel coding is not enabled, it indicates that the second device does not enable the downlink control channel either. In another example, whether the second device enables a HARQ-ACK feedback and whether the second device enables a control channel may be associated. For example, if the second device sends second configuration information, and content of the second configuration information is enabling the HARQ-ACK feedback, it indicates that the second device also enables the downlink control channel. If the second device sends second configuration information, and content of the second configuration information is that the HARQ-ACK feedback is not enabled, it indicates that the second device does not enable the downlink control channel either.

For all embodiments of this application, in a possible implementation, the second device may send second configuration information to the first device. Correspondingly, the first device may receive the second configuration information from the second device. The second configuration information includes at least one of the following: enabling (enable) a downlink control channel, enabling channel coding, an enabled channel coding type, enabling a line code, an enabled line code type, and enabling a HARQ-ACK feedback. It should be understood that "enable (enable)" herein may also be expressed as "activate (activate)". Enabling channel coding may be specifically that the second device enables channel coding for downlink. The enabled channel coding type may be specifically a channel coding type enabled by the second device for downlink. Enabling the line code may be specifically that the second device enables the line code for downlink. The enabled line code type may be specifically a line code type enabled by the second device for downlink. Enabling the HARQ-ACK feedback may be specifically that the second device enables the HARQ-ACK feedback for downlink. The downlink may be a downlink control channel and/or a downlink data channel. If the second device does not send second configuration information to the first device, and the second configuration information is enabling a downlink control channel, or if the first device does not receive second configuration information from the second device, and the second configuration information is enabling a downlink control channel, it indicates that the second device does not enable a downlink control channel. If the second device does not send second configuration information to the first device, and the second configuration information is enabling channel coding, or if the first device does not receive second configuration information from the second device, and the second configuration information is enabling channel coding, it indicates that the second device does not enable channel coding. If the second device does not send second configuration information to the first device, and the second configuration information is enabling a line code, or if the first device does not receive second configuration information from the second device, and the second configuration information is enabling a line code, it indicates that the second device does not enable a line code. If the second device does not send second configuration information to the first device, and the second configuration information is enabling a HARQ-ACK feedback, or if the first device does not receive second configuration information from the second device, and the second configuration information is enabling a HARQ-ACK feedback, it indicates that the second device does not enable a HARQ-ACK feedback. It should be noted that the foregoing plurality of types of configuration information may be associated. For the plurality of types of associated configuration information, the second device needs to send only one type of configuration information in the plurality of types of associated configuration information. In this manner, overheads of sending the second configuration information by the second device can be reduced. In an example, enabling channel coding and enabling a downlink control channel may be associated. For example, if the second device sends second configuration information, and content included in the second configuration information is enabling channel coding, it indicates that the second device also enables the downlink control channel. In another example, that the second device enables a HARQ-ACK feedback and that the second device enables a control channel may be associated. For example, if the second device sends second configuration information, and content of the second configuration information is enabling the HARQ-ACK feedback, it indicates that the second device also enables the downlink control channel.

For all embodiments of this application, in a possible implementation, the first device sends capability information to the second device. Correspondingly, the second device receives the capability information from the first device. In other words, the first device may report the capability information to the second device.

Optionally, the capability information may include one or more of the following: whether the first device supports energy harvesting, whether the first device supports a low-power-consumption receiver, or whether the first device supports backscatter communication.

It should be understood that, that the first device supports energy harvesting may mean that the first device supports autonomously obtaining energy from an environment. A source of the energy may be at least one of the following: light, a radio wave (radio waves), a temperature difference (temperature differences), a vibration (vibrations), motion (motion), a salinity gradient (salinity gradients), wind, or a water flow (water flows). The first device converts the energy obtained from the environment into electric energy. An advantage of energy harvesting is that a battery is replaced to supply power to a device or supplement battery energy, thereby prolonging a service life of the device. Energy generated in an energy harvesting manner may be provided for a signal processing circuit or a data storage circuit of the first device, to maintain a normal working status of the first device.

It should be understood that, that the first device supports a low-power-consumption receiver may mean that the first device supports receiving a signal in an incoherent reception manner. The low-power-consumption receiver may avoid using a radio frequency module with relatively high power consumption, for example, a frequency mixer with high linearity, a voltage-controlled oscillator that can provide a precise local oscillator signal, or the like. Therefore, the low-power-consumption receiver may achieve a relatively low power consumption level. The incoherent reception manner may be envelope detection, differential demodulation, or the like. The signal may be a signal from the second device. That the first device supports the low-power-consumption receiver may mean that the first device has only the low-power-consumption receiver, or the first device has both the low-power-consumption receiver and a conventional receiver. The conventional receiver is different from the low-power-consumption receiver. The conventional receiver may have a superheterodyne, zero-intermediate-frequency, or low-intermediate-frequency receiver architecture, and the conventional receiver may support coherent reception. The conventional receiver needs to use some high-performance and high-precision module circuits to ensure reception performance of the receiver, for example, a low noise amplifier with a high gain and high linearity, a frequency mixer with high linearity, or a voltage-controlled oscillator that can provide a precise local oscillator signal. These module circuits have relatively high power consumption. Therefore, within a specific period of time, power consumption of the conventional receiver is higher than power consumption of the low-power-consumption receiver. For the first device having both the conventional receiver and the low-power-consumption receiver, energy saving may be achieved by turning off the conventional receiver and turning on the low-power-consumption receiver. The first device may receive a wake-up signal by using the low-power-consumption receiver, and trigger, by using the wake-up signal, to turn on the conventional receiver. The wake-up signal may be sent by the second device.

The envelope detection may be a signal detection method in which an envelope or an amplitude line of a low-frequency original signal is obtained by performing half-wave or full-wave rectification on a high-frequency or intermediate-frequency input signal. In this way, after receiving a signal in an envelope detection manner, the first device may obtain an envelope of an original signal. Further, the first device may perform digital sampling on the envelope of the original signal, compare the envelope with an amplitude or energy threshold set by the first device, and determine whether the received signal is 1 or 0. Certainly, the first device may alternatively determine, in another implementation, whether the received signal is 1 or 0. This is not specifically limited in this embodiment of this application.

It should be understood that, that the first device supports backscatter communication may mean that the first device supports transferring information to the second device when there is no radio frequency link for active transmission; or the first device supports transferring information to the second device when the first device has a radio frequency link for active transmission but does not need to enable the radio frequency link. In other words, in this case, the first device mainly depends on an excitation device other than the second device or a continuous carrier transmitted by the second device to perform modulation. For example, the first device may reflect some or all incident carriers by adjusting impedance of an antenna of the first device; or the first device may not reflect an incident carrier or absorb energy of an incident carrier by adjusting impedance of an antenna of the first device. In this way, the first device can modulate digital information of the first device to the incident carrier by adjusting the impedance of the antenna of the first device, and transfer the carrier to the second device.

Optionally, for all embodiments of this application, a maximum bandwidth supported by the first device is limited.

Optionally, in a possible implementation, a maximum uplink bandwidth supported by the first device does not exceed X1.

For example, X1 is 20 MHz, or X1 is 5 MHz, or X1 is 3 MHz, or X1 is 1.4 MHz, or X1 is 1 MHz, or X1 is 720 kHz, or X1 is 540 kHz, or X1 is 360 kHz, or X1 is 180 kHz.

Alternatively, optionally, X1 is K1 resource blocks, and K1 is a positive integer.

For example, K1 is a positive integer less than or equal to 11, or K1 is a positive integer less than or equal to 25, or K1 is a positive integer less than or equal to 51, or K1 is a positive integer less than or equal to 106.

Optionally, for all embodiments of this application, in another possible implementation, a maximum downlink bandwidth supported by the first device does not exceed Y1.

For example, Y1 is 20 MHz, or Y1 is 5 MHz, or Y1 is 3 MHz, or Y1 is 1.4 MHz, or Y1 is 1 MHz, or Y1 is 720 kHz, or Y1 is 540 kHz, or Y1 is 360 kHz, or Y1 is 180 kHz.

Alternatively, optionally, Y1 is K2 resource blocks, and K2 is a positive integer.

For example, K2 is a positive integer less than or equal to 11, or K2 is a positive integer less than or equal to 25, or K2 is a positive integer less than or equal to 51, or K2 is a positive integer less than or equal to 106.

Optionally, for all embodiments of this application, the maximum uplink bandwidth supported by the first device is less than or equal to the maximum downlink bandwidth supported by the first device.

Optionally, for all embodiments of this application, the first device supports a limited quantity of transmit antennas and/or a limited quantity of receive antennas.

Optionally, a quantity of receive antennas of the first device does not exceed X2. X2 is 1, 2, or 4.

Alternatively, optionally, a quantity of receive branches (Rx branch) of the first device does not exceed X2, where X2 is 1, 2, or 4.

Optionally, a quantity of transmit antennas of the first device does not exceed Y2. Y2 is 1, 2, or 4.

Alternatively, optionally, a quantity of transmit branches of the first device does not exceed Y2. Y2 is 1, 2, or 4.

Optionally, the quantity of transmit antennas of the first device is greater than or equal to the quantity of receive antennas of the second device.

Alternatively, optionally, the quantity of transmit branches of the first device is greater than or equal to the quantity of receive branches of the first device.

It should be noted that, in embodiments of this application, the "receive branch" may also be referred to as a "quantity of receive radio frequency channels" or a "quantity of receive radio frequency chains (RF chain)". The "transmit branch" may also be referred to as a "quantity of transmit radio frequency channels" or a "quantity of transmit radio frequency chains".

It should be noted that the first device cannot simultaneously perform sending and receiving in a serving cell having a paired spectrum (paired spectrum).

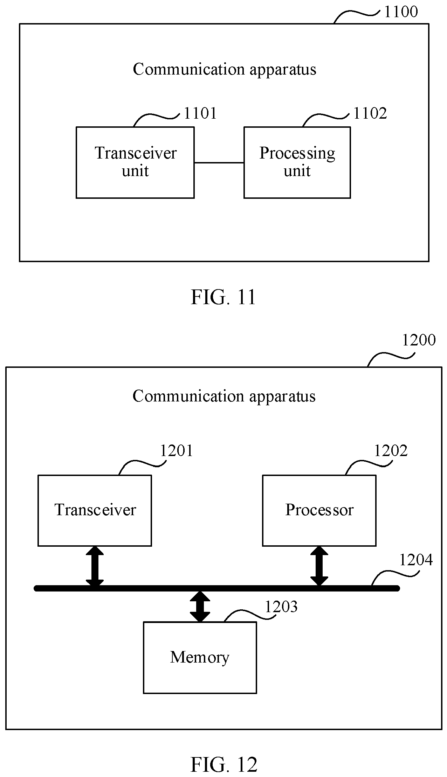

Based on the foregoing embodiments, an embodiment of this application further provides a communication apparatus. Refer to FIG. 11. The communication apparatus 1100 may include a transceiver unit 1101 and a processing unit 1102. The transceiver unit 1101 is used by the communication apparatus 1100 to perform communication, for example, receive information, a signal, or data, or send information, a signal, or data. The processing unit 1102 is configured to control and manage an action of the communication apparatus 1100. The processing unit 1102 may further control a step performed by the transceiver unit 1101.

For example, the communication apparatus 1100 may be specifically an apparatus for receiving control information of downlink data, for example, the first device in the foregoing embodiments, or a processor, a chip, a chip system, or a functional module of the first device. Alternatively, the communication apparatus 1100 may be specifically an apparatus for sending control information of downlink data, for example, the second device in the foregoing embodiments, or a processor, a chip, a chip system, or a functional module of the second device.

In an embodiment, when the communication apparatus 1100 is configured to implement a function of the first device in the foregoing embodiments, the transceiver unit 1101 may be configured to: receive a synchronization signal from a second device, where at least one parameter of control information of downlink data is related to the synchronization signal, the at least one parameter includes a resource position of the control information of the downlink data or a first parameter of the control information of the downlink data, and the control information of the downlink data is used to schedule the downlink data; receive the control information of the downlink data from the second device based on the at least one parameter of the control information of the downlink data; and receive the downlink data from the second device based on the control information of the downlink data. The processing unit 1102 may control the foregoing receiving operation of the transceiver unit 1101.

For example, the synchronization signal includes one or more of the following functions: automatic gain control AGC, time synchronization, frequency synchronization, data packet detection, or boundary detection.

In time domain, the synchronization signal is before the control information of the downlink data, and the control information of the downlink data is before the downlink data.

In an optional implementation, that the resource position of the control information of the downlink data is related to the synchronization signal includes: A time domain position of the control information of the downlink data is determined based on a time domain position of the synchronization signal, and/or a frequency domain position of the control information of the downlink data is determined based on a frequency domain position of the synchronization signal.

In an example, a start time domain position of the control information of the downlink data is adjacent to an end time domain position of the synchronization signal; or there is a first time interval between a start time domain position of the control information of the downlink data and an end time domain position of the synchronization signal; and the first time interval is preset, or the first time interval is configured by the second device, or the first time interval is related to a parameter of the synchronization signal, and the parameter of the synchronization signal includes one or more of the following: a sequence of the synchronization signal, a length of the synchronization signal, a quantity of repetitions of the synchronization signal, or a spreading factor of the synchronization signal.

In an example, a center frequency of a frequency domain resource of the control information of the downlink data is the same as a center frequency of a frequency domain resource of the synchronization signal, and a bandwidth of the control information of the downlink data is different from a bandwidth of the synchronization signal; or a frequency domain resource of the control information of the downlink data is the same as a frequency domain resource of the synchronization signal; or there is a first frequency domain gap between a start frequency domain position of the control information of the downlink data and an end frequency domain position of the synchronization signal. The first frequency domain gap is preset, or the first frequency domain gap is configured by the second device, or the first frequency domain gap is related to a parameter of the synchronization signal, and the parameter of the synchronization signal includes one or more of the following: a sequence of the synchronization signal, a length of the synchronization signal, a quantity of repetitions of the synchronization signal, or a spreading factor of the synchronization signal.

In a possible manner, a quantity of bits of the control information of the downlink data is less than X, a cyclic redundancy check CRC is not used for the control information of the downlink data, a CRC is used for the downlink data, and X is a positive integer; or a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers.

Optionally, L1 is 6, and L2 is 16.

Optionally, L1 is determined based on the quantity of bits of the control information of the downlink data.

For example, that L1 is determined based on the quantity of bits of the control information of the downlink data includes: When the quantity of bits of the control information of the downlink data is less than or equal to a first value, L1 is 6; or when the quantity of bits of the control information of the downlink data is greater than the first value, L1 is 11.

In a manner, the control information of the downlink data and the downlink data support channel coding, and a channel coding type supported by the control information of the downlink data is the same as a channel coding type supported by the downlink data.

Further, the control information of the downlink data includes a field indicating a transport block size of the downlink data or a field indicating a code block size of the downlink data.

In an optional implementation, that the first parameter of the control information of the downlink data is related to the synchronization signal includes: The first parameter of the control information of the downlink data is determined based on a parameter of the synchronization signal. The parameter of the synchronization signal includes one or more of the following: the sequence of the synchronization signal, the length of the synchronization signal, the quantity of repetitions of the synchronization signal, or the spreading factor of the synchronization signal.

For example, the first parameter of the control information of the downlink data includes one or more of the following: a bandwidth of the control information of the downlink data, a subcarrier spacing of the control information of the downlink data, a cyclic prefix CP type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data.

Optionally, a coverage level of the synchronization signal corresponds to a parameter of the synchronization signal, and the parameter of the synchronization signal includes one or more of the following: the sequence of the synchronization signal, the length of the synchronization signal, the quantity of repetitions of the synchronization signal, or the spreading factor of the synchronization signal.

In a possible manner, the control information of the downlink data includes one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data.

A value range of a second parameter in the control information of the downlink data is related to a parameter of the synchronization signal; the parameter of the synchronization signal includes one or more of the following: the sequence of the synchronization signal, the length of the synchronization signal, the quantity of repetitions of the synchronization signal, or the spreading factor of the synchronization signal; and the second parameter in the control information of the downlink data includes one or more of the following: the quantity of repetitions of the downlink data, the modulation scheme of the downlink data, the channel coding parameter of the downlink data, or the line code parameter of the downlink data.

Optionally, the control information of the downlink data indicates the modulation scheme of the downlink data and the channel coding parameter of the downlink data by using a first index.

Optionally, the control information of the downlink data includes first indication information and/or second indication information; the first indication information indicates whether channel coding is enabled for the downlink data; and the second indication information indicates whether the downlink data has an end indicator.

For example, when the control information of the downlink data indicates that channel coding is enabled for the downlink data, the control information of the downlink data includes information used to determine a modulation and coding scheme MCS of the downlink data or the channel coding parameter of the downlink data; or when the control information of the downlink data indicates that channel coding is not enabled for the downlink data, the control information of the downlink data includes information used to determine the quantity of repetitions of the downlink data.

In an example, the information used to determine the MCS of the downlink data or the channel coding parameter of the downlink data and the information used to determine the quantity of repetitions of the downlink data occupy a same bit.

Optionally, when the second indication information indicates that the downlink data does not have an end indicator, the control information of the downlink data includes a field indicating a transport block size of the downlink data or a field indicating a code block size of the downlink data; or when the second indication information indicates that the downlink data has an end indicator, the control information of the downlink data includes a field indicating an MCS of the downlink data or a field indicating the quantity of repetitions of the downlink data.

In an optional manner, the transceiver unit 1101 may be further configured to receive first information from the second device, where the first information indicates a coverage level of a synchronization signal corresponding to downlink data after the downlink data.

It should be noted that, in addition to the function of the first device, receiving and sending operations of the first device in all embodiments of this application may be performed by the transceiver unit 1101, and the processing unit 1102 may perform an operation other than the receiving and sending operations performed by the first device. For details, refer to related descriptions of the foregoing method embodiments. Details are not described herein again.

In another embodiment, when the communication apparatus 1100 is configured to implement a function of the first device in the foregoing embodiments, the transceiver unit 1101 may be configured to: send a synchronization signal to a first device, where at least one parameter of control information of downlink data is related to the synchronization signal, the at least one parameter includes a resource position of the control information of the downlink data or a first parameter of the control information of the downlink data, and the control information of the downlink data is used to schedule the downlink data; send the control information of the downlink data to the first device based on the at least one parameter of the control information of the downlink data; and send the downlink data to the first device based on the control information of the downlink data. The processing unit 1102 may be configured to control the transceiver unit 1101 to perform the foregoing sending operation.

For example, the synchronization signal includes one or more of the following functions: automatic gain control AGC, time synchronization, frequency synchronization, data packet detection, or boundary detection.

In time domain, the synchronization signal is before the control information of the downlink data, and the control information of the downlink data is before the downlink data.

In an optional implementation, that the resource position of the control information of the downlink data is related to the synchronization signal includes: A time domain position of the control information of the downlink data is determined based on a time domain position of the synchronization signal, and/or a frequency domain position of the control information of the downlink data is determined based on a frequency domain position of the synchronization signal.

For example, a start time domain position of the control information of the downlink data is adjacent to an end time domain position of the synchronization signal; or there is a first time interval between a start time domain position of the control information of the downlink data and an end time domain position of the synchronization signal; and the first time interval is preset, or the first time interval is configured by the second device, or the first time interval is related to a parameter of the synchronization signal, and the parameter of the synchronization signal includes one or more of the following: a sequence of the synchronization signal, a length of the synchronization signal, a quantity of repetitions of the synchronization signal, or a spreading factor of the synchronization signal.

For example, a center frequency of a frequency domain resource of the control information of the downlink data is the same as a center frequency of a frequency domain resource of the synchronization signal, and a bandwidth of the control information of the downlink data is different from a bandwidth of the synchronization signal; or a frequency domain resource of the control information of the downlink data is the same as a frequency domain resource of the synchronization signal; or there is a first frequency domain gap between a start frequency domain position of the control information of the downlink data and an end frequency domain position of the synchronization signal. The first frequency domain gap is preset, or the first frequency domain gap is configured by the second device, or the first frequency domain gap is related to a parameter of the synchronization signal, and the parameter of the synchronization signal includes one or more of the following: a sequence of the synchronization signal, a length of the synchronization signal, a quantity of repetitions of the synchronization signal, or a spreading factor of the synchronization signal.

In a manner, a quantity of bits of the control information of the downlink data is less than X, a cyclic redundancy check CRC is not used for the control information of the downlink data, a CRC is used for the downlink data, and X is a positive integer; or a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers.

Optionally, L1 is 6, and L2 is 16.

Optionally, L1 is determined based on the quantity of bits of the control information of the downlink data, and L2 is 16.

For example, that L1 is determined based on the quantity of bits of the control information of the downlink data includes: When the quantity of bits of the control information of the downlink data is less than or equal to a first value, L1 is 6; or when the quantity of bits of the control information of the downlink data is greater than the first value, L1 is 11.

In a possible manner, the control information of the downlink data and the downlink data support channel coding, and a channel coding type supported by the control information of the downlink data is the same as a channel coding type supported by the downlink data.

The control information of the downlink data includes a field indicating a transport block size of the downlink data or a field indicating a code block size of the downlink data.

In an optional implementation, that the first parameter of the control information of the downlink data is related to the synchronization signal includes: The first parameter of the control information of the downlink data is determined based on a parameter of the synchronization signal. The parameter of the synchronization signal includes one or more of the following: the sequence of the synchronization signal, the length of the synchronization signal, the quantity of repetitions of the synchronization signal, or the spreading factor of the synchronization signal.

For example, the first parameter of the control information of the downlink data includes one or more of the following: a bandwidth of the control information of the downlink data, a subcarrier spacing of the control information of the downlink data, a cyclic prefix CP type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data.

Optionally, a coverage level of the synchronization signal corresponds to a parameter of the synchronization signal, and the parameter of the synchronization signal includes one or more of the following: the sequence of the synchronization signal, the length of the synchronization signal, the quantity of repetitions of the synchronization signal, or the spreading factor of the synchronization signal.

For example, the control information of the downlink data includes one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data.

Optionally, a value range of a second parameter in the control information of the downlink data is related to a parameter of the synchronization signal; the parameter of the synchronization signal includes one or more of the following: the sequence of the synchronization signal, the length of the synchronization signal, the quantity of repetitions of the synchronization signal, or the spreading factor of the synchronization signal; and the second parameter in the control information of the downlink data includes one or more of the following: the quantity of repetitions of the downlink data, the modulation scheme of the downlink data, the channel coding parameter of the downlink data, or the line code parameter of the downlink data.

In an example, the control information of the downlink data indicates the modulation scheme of the downlink data and the channel coding parameter of the downlink data by using a first index.

In an optional implementation, the control information of the downlink data includes first indication information and/or second indication information; the first indication information indicates whether channel coding is enabled for the downlink data; and the second indication information indicates whether the downlink data has an end indicator.

For example, when the control information of the downlink data indicates that channel coding is enabled for the downlink data, the control information of the downlink data includes information used to determine a modulation and coding scheme MCS or the channel coding parameter of the downlink data; or when the control information of the downlink data indicates that channel coding is not enabled for the downlink data, the control information of the downlink data includes information used to determine the quantity of repetitions of the downlink data.

Optionally, the information used to determine the MCS or the channel coding parameter of the downlink data and the information used to determine the quantity of repetitions of the downlink data occupy a same bit.

In a possible manner, when the second indication information indicates that the downlink data does not have an end indicator, the control information of the downlink data includes a field indicating a transport block size of the downlink data or a field indicating a code block size of the downlink data; or when the second indication information indicates that the downlink data has an end indicator, the control information of the downlink data includes a field indicating an MCS of the downlink data or a field indicating the quantity of repetitions of the downlink data.

Optionally, the processing unit 1102 may be further configured to determine that a coverage level of a synchronization signal corresponding to downlink data after the downlink data needs to be updated. The transceiver unit 1101 may be further configured to send first information to the first device, where the first information indicates the coverage level of the synchronization signal corresponding to the downlink data after the downlink data.

It should be noted that, in addition to the function of the second device, receiving and sending operations of the second device in all embodiments of this application may be performed by the transceiver unit 1101, and the processing unit 1102 may perform an operation other than the receiving and sending operations performed by the second device. For details, refer to related descriptions of the foregoing method embodiments. Details are not described herein again.

It should be noted that division into the units in embodiments of this application is an example, and is merely logical function division. During actual implementation, there may be another division manner. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the contributing part, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 12. The communication apparatus 1200 may include a transceiver 1201 and a processor 1202. Optionally, the communication apparatus 1200 may further include a memory 1203. The memory 1203 may be disposed inside the communication apparatus 1200, or may be disposed outside the communication apparatus 1200. The processor 1202 may control the transceiver 1201 to receive and send packets, information, messages, data, or the like.

Specifically, the processor 1202 may be a central processing unit (central processing unit, CPU), a network processor (network processor, NP), or a combination of a CPU and an NP. The processor 1202 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The transceiver 1201, the processor 1202, and the memory 1203 are connected to each other. Optionally, the transceiver 1201, the processor 1202, and the memory 1203 are connected to each other through a bus 1204. The bus 1204 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, or the like. For ease of representation, only one bold line is used for representation in FIG. 12, but this does not mean that there is only one bus or only one type of bus.

In an optional implementation, the memory 1203 is configured to store a program and the like. Specifically, the program may include program code, and the program code includes computer operation instructions. The memory 1203 may include a RAM, and may further include a non-volatile memory (non-volatile memory), such as one or more disk memories. The processor 1202 executes the application program stored in the memory 1203, to implement the foregoing function, thereby implementing a function of the communication apparatus 1200.

For example, the communication apparatus 1200 may be an apparatus for receiving control information of downlink data, for example, the first device in the foregoing embodiments; or may be an apparatus for sending control information of downlink data, for example, the second device in the foregoing embodiments.

In an embodiment, when the communication apparatus 1200 implements a function of the first device in the foregoing embodiments, the transceiver 1201 may implement receiving and sending operations performed by the first device in the foregoing embodiments; and the processor 1202 may implement an operation other than the receiving and sending operations performed by the first device in the foregoing embodiments. For detailed related descriptions, refer to related descriptions in all the foregoing method embodiments. Details are not described herein again.

In another embodiment, when the communication apparatus 1200 implements a function of the second device in the foregoing embodiments, the transceiver 1201 may implement receiving and sending operations performed by the second device in the foregoing embodiments; and the processor 1202 may implement an operation other than the receiving and sending operations performed by the second device in the foregoing embodiments. For detailed related descriptions, refer to related descriptions in all the foregoing method embodiments. Details are not described herein again.

Based on the foregoing embodiments, an embodiment of this application provides a communication system. The communication system may include the first device, the second device, and the like in the foregoing embodiments.

An embodiment of this application further provides a computer-readable storage medium. The computer-readable storage medium is configured to store a computer program. When the computer program is executed by a computer, the computer may implement the method provided in the foregoing method embodiments.

An embodiment of this application further provides a computer program product. The computer program product is configured to store a computer program. When the computer program is executed by a computer, the computer may implement the method provided in the foregoing method embodiments.

An embodiment of this application further provides a chip, including a processor. The processor is coupled to a memory, and is configured to invoke a program in the memory, so that the chip implements the method provided in the foregoing method embodiments.

An embodiment of this application further provides a chip. The chip is coupled to a memory, and the chip is configured to implement the method provided in the foregoing method embodiments.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the scope of this application. Thus, this application is intended to cover these modifications and variations, provided that they fall within the scope of the claims of this application and their equivalent technologies.

**Claims**

1. A method for receiving control information of downlink data, comprising:

receiving, by a first device, a synchronization signal from a second device, wherein at least one parameter of control information of downlink data is related to the synchronization signal, the at least one parameter comprises a resource position of the control information of the downlink data or a first parameter of the control information of the downlink data, and the control information of the downlink data is used to schedule the downlink data;
receiving, by the first device, the control information of the downlink data from the second device based on the at least one parameter of the control information of the downlink data; and
receiving, by the first device, the downlink data from the second device based on the control information of the downlink data.

2. The method according to claim 1, wherein that the resource position of the control information of the downlink data is related to the synchronization signal comprises:
a time domain position of the control information of the downlink data is determined based on a time domain position of the synchronization signal, and/or a frequency domain position of the control information of the downlink data is determined based on a frequency domain position of the synchronization signal.

3. The method according to claim 2, wherein a start time domain position of the control information of the downlink data is adjacent to an end time domain position of the synchronization signal; or
there is a first time interval between a start time domain position of the control information of the downlink data and an end time domain position of the synchronization signal; and the first time interval is preset, or the first time interval is configured by the second device, or the first time interval is related to a parameter of the synchronization signal, and the parameter of the synchronization signal comprises one or more of the following: a sequence of the synchronization signal, a length of the synchronization signal, a quantity of repetitions of the synchronization signal, or a spreading factor of the synchronization signal.

4. The method according to any one of claims 1 to 3, wherein a quantity of bits of the control information of the downlink data is less than X, a cyclic redundancy check CRC is not used for the control information of the downlink data, and X is a positive integer; or
a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers.

5. The method according to any one of claims 1 to 4, wherein that the first parameter of the control information of the downlink data is related to the synchronization signal comprises:

   the first parameter of the control information of the downlink data is determined based on a parameter of the synchronization signal; and
   the parameter of the synchronization signal comprises one or more of the following: the sequence of the synchronization signal, the length of the synchronization signal, the quantity of repetitions of the synchronization signal, or the spreading factor of the synchronization signal.

6. The method according to any one of claims 1 to 5, wherein the first parameter of the control information of the downlink data comprises one or more of the following: a bandwidth of the control information of the downlink data, a subcarrier spacing of the control information of the downlink data, a cyclic prefix CP type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data.

7. The method according to any one of claims 1 to 6, wherein the control information of the downlink data comprises one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data.

8. The method according to claim 7, wherein a value range of a second parameter in the control information of the downlink data is related to a parameter of the synchronization signal;

   the parameter of the synchronization signal comprises one or more of the following: the sequence of the synchronization signal, the length of the synchronization signal, the quantity of repetitions of the synchronization signal, or the spreading factor of the synchronization signal; and
   the second parameter in the control information of the downlink data comprises one or more of the following: the quantity of repetitions of the downlink data, the modulation scheme of the downlink data, the channel coding parameter of the downlink data, or the line code parameter of the downlink data.

9. A method for sending control information of downlink data, comprising:

   sending, by a second device, a synchronization signal to a first device, wherein at least one parameter of control information of downlink data is related to the synchronization signal, the at least one parameter comprises a resource position of the control information of the downlink data or a first parameter of the control information of the downlink data, and the control information of the downlink data is used to schedule the downlink data;

sending, by the second device, the control information of the downlink data to the first device based on the at least one parameter of the control information of the downlink data; and

sending, by the second device, the downlink data to the first device based on the control information of the downlink data.

10. The method according to claim 9, wherein that the resource position of the control information of the downlink data is related to the synchronization signal comprises:

a time domain position of the control information of the downlink data is determined based on a time domain position of the synchronization signal, and/or a frequency domain position of the control information of the downlink data is determined based on a frequency domain position of the synchronization signal.

11. The method according to claim 10, wherein a start time domain position of the control information of the downlink data is adjacent to an end time domain position of the synchronization signal; or

there is a first time interval between a start time domain position of the control information of the downlink data and an end time domain position of the synchronization signal; and the first time interval is preset, or the first time interval is configured by the second device, or the first time interval is related to a parameter of the synchronization signal, and the parameter of the synchronization signal comprises one or more of the following: a sequence of the synchronization signal, a length of the synchronization signal, a quantity of repetitions of the synchronization signal, or a spreading factor of the synchronization signal.

12. The method according to any one of claims 9 to 11, wherein a quantity of bits of the control information of the downlink data is less than X, a cyclic redundancy check CRC is not used for the control information of the downlink data, and X is a positive integer; or

a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers.

13. The method according to any one of claims 9 to 12, wherein that the first parameter of the control information of the downlink data is related to the synchronization signal comprises:

the first parameter of the control information of the downlink data is determined based on a parameter of the synchronization signal; and

the parameter of the synchronization signal comprises one or more of the following: the sequence of the synchronization signal, the length of the synchronization signal, the quantity of repetitions of the synchronization signal, or the spreading factor of the synchronization signal.

14. The method according to any one of claims 9 to 13, wherein the first parameter of the control information of the downlink data comprises one or more of the following: a bandwidth of the control information of the downlink data, a subcarrier spacing of the control information of the downlink data, a cyclic prefix CP type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data.

15. The method according to any one of claims 9 to 14, wherein the control information of the downlink data comprises one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data.

16. The method according to claim 15, wherein a value range of a second parameter in the control information of the downlink data is related to a parameter of the synchronization signal;

the parameter of the synchronization signal comprises one or more of the following: the sequence of the synchronization signal, the length of the synchronization signal, the quantity of repetitions of the synchronization signal, or the spreading factor of the synchronization signal; and

the second parameter in the control information of the downlink data comprises one or more of the following: the quantity of repetitions of the downlink data, the modulation scheme of the downlink data, the channel coding parameter of the downlink data, or the line code parameter of the downlink data.

17. A method for receiving and sending control information of downlink data, comprising:

sending, by a second device, a synchronization signal to a first device, wherein at least one parameter of control information of downlink data is related to the synchronization signal, the at least one parameter comprises a resource position of the control information of the downlink data or a first parameter of the control information of the downlink data, and the control information of the downlink data is used to schedule the downlink data;

receiving, by the first device, the synchronization signal from the second device;

sending, by the second device, the control information of the downlink data to the first device based on the at least one parameter of the control information of the downlink data;

receiving, by the first device, the control information of the downlink data from the second device based on the at least one parameter of the control information of the downlink data;

sending, by the second device, the downlink data to the first device based on the control information of the downlink data; and

receiving, by the first device, the downlink data from the second device based on the control information of the downlink data.

18. The method according to claim 17, wherein that the resource position of the control information of the downlink data is related to the synchronization signal comprises:

a time domain position of the control information of the downlink data is determined based on a time domain position of the synchronization signal, and/or a frequency domain position of the control information of the downlink data is determined based on a frequency domain position of the synchronization signal.

19. The method according to claim 18, wherein a start time domain position of the control information of the downlink data is adjacent to an end time domain position of the synchronization signal; or

there is a first time interval between a start time domain position of the control information of the downlink data and an end time domain position of the synchronization signal; and the first time interval is preset, or the first time interval is configured by the second device, or the first time interval is related to a parameter of the synchronization signal, and the parameter of the synchronization signal comprises one or more of the following: a sequence of the synchronization signal, a length of the synchronization signal, a quantity of repetitions of the synchronization signal, or a spreading factor of the synchronization signal.

20. The method according to any one of claims 17 to 19, wherein a quantity of bits of the control information of the downlink data is less than X, a cyclic redundancy check CRC is not used for the control information of the downlink data, and X is a positive integer; or

a CRC is used for the control information of the downlink data, a CRC is used for the downlink data, a quantity of bits corresponding to the CRC used for the control information of the downlink data is L1, a quantity of bits corresponding to the CRC used for the downlink data is L2, and L1 and L2 are different positive integers.

21. The method according to any one of claims 17 to 20, wherein that the first parameter of the control information of the downlink data is related to the synchronization signal comprises:

the first parameter of the control information of the downlink data is determined based on a parameter of the synchronization signal; and

the parameter of the synchronization signal comprises one or more of the following: the sequence of the synchronization signal, the length of the synchronization signal, the quantity of repetitions of the synchronization signal, or the spreading factor of the synchronization signal.

22. The method according to any one of claims 17 to 21, wherein the first parameter of the control information of the downlink data comprises one or more of the following: a bandwidth of the control information of the downlink data, a subcarrier spacing of the control information of the downlink data, a cyclic prefix CP type of the control information of the downlink data, a line code parameter of the control information of the downlink data, a channel coding parameter of the control information of the downlink data, a modulation scheme of the control information of the downlink data, a quantity of repetitions of the control information of the downlink data, a spreading factor of the control information of the downlink data, a data rate of the control information of the downlink data, a time length of the control information of the downlink data, a modulation depth of the control information of the downlink data, or a duty cycle of the control information of the downlink data.

23. The method according to any one of claims 17 to 22, wherein the control information of the downlink data comprises one or more of the following: a bandwidth of the downlink data, a frequency domain resource position of the downlink data, a time resource position of the downlink data, a subcarrier spacing of the downlink data, a CP type of the downlink data, a line code parameter of the downlink data, a channel coding parameter of the downlink data, a modulation scheme of the downlink data, a quantity of repetitions of the downlink data, a spreading factor of the downlink data, a data rate of the downlink data, a time length of the downlink data, a modulation depth of the downlink data, a duty cycle of the downlink data, a quantity of time units occupied by the downlink data, or a redundancy version of the downlink data.

24. The method according to claim 23, wherein a value range of a second parameter in the control information of the downlink data is related to a parameter of the synchronization signal;

the parameter of the synchronization signal comprises one or more of the following: the sequence of the synchronization signal, the length of the synchronization signal, the quantity of repetitions of the synchronization signal, or the spreading factor of the synchronization signal; and
the second parameter in the control information of the downlink data comprises one or more of the following: the quantity of repetitions of the downlink data, the modulation scheme of the downlink data, the channel coding parameter of the downlink data, or the line code parameter of the downlink data.

25. An apparatus for receiving control information of downlink data, comprising a memory, a processor, and a transceiver, wherein

the transceiver is used by the communication apparatus to perform communication;
the memory is configured to store computer instructions; and
the processor is configured to invoke the computer instructions in the memory, to perform the method according to any one of claims 1 to 8 by using the transceiver.

26. An apparatus for sending control information of downlink data, comprising a memory, a processor, and a transceiver, wherein

the transceiver is used by the communication apparatus to perform communication;
the memory is configured to store computer instructions; and
the processor is configured to invoke the computer instructions in the memory, to perform the method according to any one of claims 9 to 16 by using the transceiver.

27. A communication system, comprising the apparatus for receiving control information of downlink data according to claim 25 and the apparatus for sending control information of downlink data according to claim 26.

28. A computer-readable storage medium, wherein the computer-readable storage medium stores computer-executable instructions, and when the computer-executable instructions are invoked by a computer, the method according to any one of claims 1 to 8 is performed, or the method according to any one of claims 9 to 16 is performed.

29. A computer program product, comprising instructions, wherein when the instructions are run on a computer, the method according to any one of claims 1 to 8 or the method according to any one of claims 9 to 16 is performed.

30. A chip, wherein the chip is coupled to a memory, and is configured to read and execute program instructions stored in the memory, to implement the method according to any one of claims 1 to 8, or implement the method according to any one of claims 9 to 16.

FIG. 1a

FIG. 1b

| Second device | | First device |
|---|---|---|
| | 201: Synchronization signal, where at least one parameter of control information of downlink data is related to the synchronization signal → | |
| | 202: Send or receive the control information of the downlink data based on the at least one parameter of the control information of the downlink data → | |
| | 203: Send or receive the downlink data based on the control information of the downlink data → | |

FIG. 2

| Synchronization signal | Control information of downlink data |
|---|---|

Time domain →

FIG. 3

First time interval

| Synchronization signal | ←——————→ | Control information of downlink data |
|---|---|---|

Time domain →

FIG. 4

Frequency domain ↑

– – – | Synchronization signal | – – | Control information of downlink data | – – – –

FIG. 5

FIG. 6

FIG. 7

Code rate = 1, and quantity of repetitions = 8

| Coverage level 0 | Synchronization signal [W] | Control information of downlink data | Downlink data |
|---|---|---|---|

Code rate = 1/4, and quantity of repetitions = 8

| Coverage level 1 | Synchronization signal [W' W'] | Control information of downlink data | Downlink data |
|---|---|---|---|

Code rate = 1/4, and quantity of repetitions = 64

| Coverage level 2 | Synchronization signal [W' W W' W] | Control information of downlink data | Downlink data |
|---|---|---|---|

FIG. 8

| Select (Select) | CW | Query (Query) | CW | ACK | CW | Repeated query (QueryRep) |
|---|---|---|---|---|---|---|
| | | | RN16 | | PC/XPC, EPC, packet CRC (packet CRC) | NAK |
| | T4 | | T1   T2 | | T1   T2 | |

FIG. 9

| Coverage level 2 | Synchronization signal | Control information of downlink data | Downlink data (for example, select (Select)) |
|---|---|---|---|

| Coverage level 2 | Synchronization signal | Control information of downlink data | Downlink data (for example, query (Query)) |
|---|---|---|---|

Detect a large quantity of conflicts

| Coverage level 2 | Synchronization signal | Control information of downlink data | Downlink data (for example, repeated query (QueryRep)) |
|---|---|---|---|

| Coverage level 0 | Synchronization signal | Control information of downlink data | Downlink data (for example, repeated query (QueryRep)) |
|---|---|---|---|

Signaling order

Second device

□ Device at the coverage level 2

■ Device at the coverage level 0

FIG. 10

FIG. 11

FIG. 12

## INTERNATIONAL SEARCH REPORT

| International application No. |
|---|
| **PCT/CN2023/104100** |

**A. CLASSIFICATION OF SUBJECT MATTER**

H04W 72/12(2023.01)i

According to International Patent Classification (IPC) or to both national classification and IPC

**B. FIELDS SEARCHED**

Minimum documentation searched (classification system followed by classification symbols)

IPC: H04W 72/-

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, VEN, WPABS, WPABSC: 边界检测, 反向散射, 唤醒, 控制, 频率同步, 前导码, 时间同步, 数据包检测, 同步, 同步信号, 下行, 自动增益控制, backscatter, control, CRC, downlink, huawei, power, preamble, saving, up, wake, WUS, boundary detection, automatic gain control, sync+ signal, time sync+, frequency sync+, wake-up, sync+

**C. DOCUMENTS CONSIDERED TO BE RELEVANT**

| Category* | Citation of document, with indication, where appropriate, of the relevant passages | Relevant to claim No. |
|---|---|---|
| X | CN 114175775 A (HUAWEI TECHNOLOGIES CO., LTD.) 11 March 2022 (2022-03-11) description, paragraphs [95] and [105]-[121] | 1, 9, 17, 25-30 |
| A | CN 111934830 A (HUAWEI TECHNOLOGIES CO., LTD.) 13 November 2020 (2020-11-13) entire document | 1-30 |
| A | CN 113347691 A (SPREADTRUM SEMICONDUCTOR (NANJING) CO., LTD.) 03 September 2021 (2021-09-03) entire document | 1-30 |
| A | CN 113950073 A (HUAWEI TECHNOLOGIES CO., LTD.) 18 January 2022 (2022-01-18) entire document | 1-30 |
| A | CN 114128373 A (HUAWEI TECHNOLOGIES CO., LTD.) 01 March 2022 (2022-03-01) entire document | 1-30 |
| A | CN 113261320 A (HUAWEI TECHNOLOGIES CO., LTD.) 13 August 2021 (2021-08-13) entire document | 1-30 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 September 2023** | **20 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center">**INTERNATIONAL SEARCH REPORT**</td><td>International application No.</td></tr>
<tr><td colspan="2"></td><td>**PCT/CN2023/104100**</td></tr>
</table>

**C.    DOCUMENTS CONSIDERED TO BE RELEVANT**

| Category* | Citation of document, with indication, where appropriate, of the relevant passages | Relevant to claim No. |
|-----------|-----------------------------------------------------------------------------------|-----------------------|
| A | ERICSSON. "R1-1712984 Downlink channel power efficiency for MTC" *3GPP TSG-RAN WG1 Meeting #90*, 12 August 2017 (2017-08-12), entire document | 1-30 |
| A | HUAWEI, et al. "R2-1708301 Power saving signal or channel in NB-IoT" *3GPP TSG-RAN WG2 Meeting #99*, 11 August 2017 (2017-08-11), entire document | 1-30 |

Form PCT/ISA/210 (second sheet) (July 2022)

EP 4 543 121 A1

**INTERNATIONAL SEARCH REPORT**
Information on patent family members

International application No.

**PCT/CN2023/104100**

| Patent document cited in search report | | | Publication date (day/month/year) | Patent family member(s) | | | Publication date (day/month/year) |
|---|---|---|---|---|---|---|---|
| CN | 114175775 | A | 11 March 2022 | WO | 2021035440 | A1 | 04 March 2021 |
| | | | | US | 2022183029 | A1 | 09 June 2022 |
| | | | | EP | 4021102 | A1 | 29 June 2022 |
| | | | | EP | 4021102 | A4 | 31 August 2022 |
| CN | 111934830 | A | 13 November 2020 | CN | 111934830 | B | 27 December 2022 |
| | | | | WO | 2020228647 | A1 | 19 November 2020 |
| | | | | US | 2022070780 | A1 | 03 March 2022 |
| | | | | EP | 3952192 | A1 | 09 February 2022 |
| | | | | EP | 3952192 | A4 | 08 June 2022 |
| CN | 113347691 | A | 03 September 2021 | CN | 113347691 | B | 02 August 2022 |
| | | | | WO | 2021164593 | A1 | 26 August 2021 |
| CN | 113950073 | A | 18 January 2022 | WO | 2022012667 | A1 | 20 January 2022 |
| | | | | US | 2023156500 | A1 | 18 May 2023 |
| | | | | EP | 4171103 | A1 | 26 April 2023 |
| CN | 114128373 | A | 01 March 2022 | WO | 2021031026 | A1 | 25 February 2021 |
| CN | 113261320 | A | 13 August 2021 | CN | 113261320 | B | 26 July 2022 |
| | | | | WO | 2020181441 | A1 | 17 September 2020 |

Form PCT/ISA/210 (patent family annex) (July 2022)

**REFERENCES CITED IN THE DESCRIPTION**

**Patent documents cited in the description**

- CN 202210833936